# EUROPEAN PATENT APPLICATION

(11) **EP 4 550 850 A1**
(43) Date of publication of application: **07.05.2025**
(21) Application number: 23849507.1
(22) Date of filing: 03.08.2023
(51) Int. Cl.: H04W 4/02

(54) **COMMUNICATION METHOD AND APPARATUS, AND SYSTEM**

(30) Priority: 04.08.2022 CN 202210932861
(71) Applicant: Huawei Technologies Co., Ltd., Shenzhen, Guangdong 518129 (CN)
(72) Inventor: LI, Meng, Shenzhen, Guangdong 518129 (CN); YANG, Yanmei, Shenzhen, Guangdong 518129 (CN)
(74) Representative: Körber, Martin Hans
(86) International application number: PCT/CN2023/111069
(87) International publication number: WO 2024/027803

(57) **Abstract**

This application provides a communication method and apparatus, and a system, and is applied to the field of communication technologies. The communication method provided in this application includes: First, an application function network element receives first area information from a first network element, where the first area information indicates an area not supporting MBS in an MBS service area; and the application function network element transmits, in a unicast mode based on the first area information, data to a terminal device located in the area not supporting MBS in the MBS service area. According to the method, the application function network element can transmit, in the unicast mode without waiting for feedback of the terminal device, data to the terminal device located in the area not supporting MBS in the MBS service area. This greatly reduces a delay of an MBS service.

## Description

This application claims priority to Chinese Patent Application No. 202210932861.8, filed with the China National Intellectual Property Administration on August 4, 2022 and entitled "COMMUNICATION METHOD AND APPARATUS, AND SYSTEM", which is incorporated herein by reference in its entirety.

### TECHNICAL FIELD

This application relates to the field of communication technologies, and in particular, to a communication method and apparatus, and a system.

### BACKGROUND

In a communication system, applicability of multicast/broadcast service (multicast/broadcast service, MBS) is limited. For example, MBS is not applicable to a scenario in which a terminal device does not support MBS, and is not applicable to a scenario in which a terminal device is located in an area not supporting MBS.

Currently, an application server sends MBS data in a specific area in a multicast/broadcast transmission mode. When a terminal device is located in an area served by a base station not supporting MBS in the specific area, the terminal device cannot receive the MBS data, and the terminal device feeds back, to the application server via an application layer, that the MBS data cannot be received. After receiving the feedback from the terminal device, the application server finds that the terminal device cannot successfully receive the MBS data, and then attempts to send the unsuccessfully transmitted MBS data to the terminal device in a unicast transmission mode.

It can be learned that the foregoing MBS data transmission procedure of the application server is complex, and the terminal device cannot receive the MBS data in a timely manner. This is an urgent problem to be resolved currently.

### SUMMARY

Embodiments of this application provide a communication method and apparatus, and a system, to resolve a problem that a terminal device cannot receive MBS data in a timely manner in an MBS data transmission procedure.

To achieve the foregoing objective, the following technical solutions are used in embodiments of this application.

According to a first aspect, a communication method is provided. The method may be performed by an application function network element or an application server, or may be performed by a component (for example, a processor, a chip, or a chip system) of an application function network element or an application server, or may be implemented by a logical module or software that can implement all or some functions of an application function network element, or may be implemented by a logical module or software that can implement all or some functions of an application server. The following provides descriptions by using an example in which the application function network element is an execution entity of the method. The method includes: The application function network element receives first area information from a first network element, where the first area information indicates an area not supporting MBS in an MBS service area; and the application function network element transmits, in a unicast mode based on the first area information, data to a terminal device located in the area not supporting MBS in the MBS service area.

Based on the communication method provided in embodiments of this application, a first network element may obtain first area information, and send the first area information to an application function network element, so that the application function network element transmits, in a unicast mode based on the first area information, data to a terminal device located in an area not supporting MBS in an MBS service area. By using the method, without waiting for feedback from the terminal device, the AF network element can more quickly discover the terminal device located in the area not supporting MBS, and transmit MBS data to the terminal device in the unicast mode. This greatly reduces a delay of an MBS service.

With reference to the first aspect, in a possible design, the first network element is a multicast session management network element, a network exposure function network element, or a multicast/broadcast service function network element.

With reference to the first aspect, in a possible design, the first network element is a multicast session management network element, and the receiving, by an application function network element, first area information from the first network element includes: receiving, by the application function network element, the first area information from the multicast session management network element via a network exposure function network element or a multicast/broadcast service function network element.

With reference to the first aspect, in a possible design, before the application function network element receives the first area information from the first network element, the method further includes: The application function network element sends a first request message to the first network element, where the first request message is for requesting to create an MBS session in the MBS service area.

With reference to the first aspect, in a possible design, the first request message carries at least one of area information of the MBS service area, identification information of the MBS service area, identification information of an MBS service, and identification information of a multicast session.

According to a second aspect, a communication method is provided. The method may be performed by a first network element, or may be performed by a component (such as a processor, a chip, or a chip system) of a first network element, or may be implemented by a logic module or software that can implement all or some functions of a first network element. The following provides descriptions by using an example in which the first network element is an execution entity of the method. The method includes: The first network element obtains first area information, where the first area information indicates an area not supporting MBS in an MBS service area; and the first network element sends the first area information to an application function network element.

Based on the communication method provided in embodiments of this application, a first network element may obtain first area information, and send the first area information to an application function network element, so that the application function network element transmits, in a unicast mode based on the first area information, data to a terminal device located in an area not supporting MBS in an MBS service area. By using the method, without waiting for feedback from the terminal device, the AF network element can more quickly discover the terminal device located in the area not supporting MBS, and transmit MBS data to the terminal device in the unicast mode. This greatly reduces a delay of an MBS service.

With reference to the second aspect, in a possible design, that the first network element obtains first area information includes: the first network element sends a second request message to a network repository function network element, where the second request message is for triggering the network repository function network element to return information about the area not supporting MBS in the MBS service area; and the first network element receives a second response message from the network repository function network element, where the second response message includes the first area information.

Based on this solution, a method of obtaining the first area information by the first network element is provided: directly obtaining the first area information from the network repository function network element.

With reference to the second aspect, in a possible design, the second request message includes at least one of area information of the MBS service area, identification information of the MBS service area, identification information of an MBS service, and identification information of a multicast session.

With reference to the second aspect, in a possible design, the first network element is a multicast session management network element, the second request message is further used for requesting to perform query on an access and mobility management function network element supporting MBS in the MBS service area, and the second response message further includes information indicating the access and mobility management function network element supporting MBS in the MBS service area. The method further includes: The first network element sends, based on the second response message, a third request message to the access and mobility management function network element supporting MBS in the MBS service area, where the third request message is for requesting to create an MBS session.

Based on this solution, the first network element may obtain the access and mobility management function network element supporting MBS in the MBS service area, and request to create the MBS session from the access and mobility management function network element supporting MBS, to avoid requesting to create the MBS session from an access and mobility management function network element not supporting MBS, thereby reducing signaling and resource overheads.

With reference to the second aspect, in a possible design, that the first network element obtains first area information includes: The first network element receives second area information from a network repository function network element, where the second area information indicates an area supporting MBS in the MBS service area; and the first network element determines the first area information based on area information of the MBS service area and the second area information.

Based on this solution, a method of obtaining the first area information by the first network element is provided: obtaining, from the network repository function network element, information indicating the area supporting MBS in the MBS service area, to determine, with reference to the area information of the MBS service area, the information about the area not supporting MBS in the MBS service area.

With reference to the second aspect, in a possible design, the method further includes: The first network element sends a fourth request message to the network repository function network element, where the fourth request message is for triggering the network repository function network element to return the second area information. In this case, the second area information is carried in a response message of the fourth request message.

Based on this solution, a method of obtaining the second area information by the first network element is provided: sending the fourth request message to the network repository function network element, to trigger the network repository function network element to carry the second area information to the response message of the fourth request message and send the response message to the first network element.

With reference to the second aspect, in a possible design, the first network element is a multicast session management network element, the fourth request message is for requesting to perform query on an access and mobility management function network element supporting MBS in the MBS service area, and the second area information indicates an area corresponding to the access and mobility management function network element supporting MBS in the MBS service area.

With reference to the second aspect, in a possible design, the first network element is a network exposure function network element or a multicast/broadcast service function network element, the fourth request message is for requesting to perform query on a multicast session management network element in the MBS service area, and the second area information indicates an area corresponding to the multicast session management network element in the MBS service area.

With reference to the second aspect, in a possible design, the first network element is a multicast session management network element. That the first network element sends the first area information to an application function network element includes: The first network element sends the first area message to the application function network element via a network exposure function network element or a multicast/broadcast service function network element.

With reference to the second aspect, in a possible design, the second area information includes identification information of a tracking area supporting MBS in the MBS service area; or the second area information includes identification information of a cell supporting MBS in the MBS service area.

According to a third aspect, a communication method is provided. The method may be performed by a network repository function network element, or may be performed by a component (for example, a processor, a chip, or a chip system) of a network repository function network element, or may be implemented by a logical module or software that can implement all or some functions of a network repository function network element. The following provides descriptions by using an example in which the network repository function network element is an execution entity of the method. The method includes: A network repository function network element receives a second request message from a first network element, where the second request message is for triggering the network repository function network element to return information about an area not supporting MBS in a multicast/broadcast service MBS service area; and the network repository function network element sends first area information to the first network element, where the first area information indicates the area not supporting MBS in the MBS service area.

Based on the communication method provided in embodiments of this application, the network repository function network element may send, to the first network element in response to the second request message sent by the first network element, the first area information indicating the area not supporting MBS in the MBS service area, so that the first network element obtains the first area information.

With reference to the third aspect, in a possible design, the second request message includes at least one of area information of the MBS service area, identification information of the MBS service area, identification information of an MBS service, and identification information of a multicast session. The method further includes: The network repository function network element determines the first area information based on at least one of the area information of the MBS service area, the identification information of the MBS service area, the identification information of the MBS service, and the identification information of the multicast session.

Based on this solution, a plurality of types of information that may be used for determining the first area information are provided.

With reference to the third aspect, in a possible design, that the network repository function network element determines the first area information based on at least one of the area information of the MBS service area, the identification information of the MBS service area, the identification information of the MBS service, and the identification information of the multicast session includes: The network repository function network element obtains, based on the area information of the MBS service area, the preconfigured information about the area not supporting MBS in the MBS service area.

Based on this solution, a method in which the network repository function network element determines the first area information based on the area information of the MBS service area is provided.

With reference to the third aspect, in a possible design, that the network repository function network element determines the first area information based on at least one of the area information of the MBS service area, the identification information of the MBS service area, the identification information of the MBS service, and the identification information of the multicast session includes: The network repository function network element determines the first area information based on the identification information of the MBS service area and a preconfigured mapping relationship between the identification information of the MBS service area and the area not supporting MBS in the MBS service area.

Based on this solution, a method in which the network repository function network element determines the first area information based on the identification information of the MBS service area is provided.

With reference to the third aspect, in a possible design, that the network repository function network element determines the first area information based on at least one of the area information of the MBS service area, the identification information of the MBS service area, the identification information of the MBS service, and the identification information of the multicast session includes: The network repository function network element determines the first area information based on the identification information of the MBS service, a preconfigured mapping relationship between the identification information of the MBS service and the MBS service area, and a preconfigured mapping relationship between the MBS service area and the area not supporting MBS in the MBS service area.

Based on this solution, a method in which the network repository function network element determines the first area information based on the identification information of the MBS service is provided.

With reference to the third aspect, in a possible design, that the network repository function network element determines the first area information based on at least one of the area information of the MBS service area, the identification information of the MBS service area, the identification information of the MBS service, and the identification information of the multicast session includes: The network repository function network element determines the first area information based on the identification information of the multicast session, a preconfigured mapping relationship between the identification information of the multicast session and the MBS service area, and a preconfigured mapping relationship between the MBS service area and the area not supporting MBS in the MBS service area.

Based on this solution, a method in which the network repository function network element determines the first area information based on the identification information of the multicast session is provided.

With reference to the third aspect, in a possible design, that the network repository function network element determines the first area information based on at least one of the area information of the MBS service area, the identification information of the MBS service area, the identification information of the MBS service, and the identification information of the multicast session includes: The network repository function network element obtains, based on the area information of the MBS service area, information about an area supporting MBS in the MBS service area; and determines the first area information based on the area information of the MBS service area and the information about the area that supports MBS in the MBS service area.

Based on this solution, another method in which the network repository function network element determines the first area information based on the area information of the MBS service area is provided.

With reference to the third aspect, in a possible design, the first network element is a multicast session management network element, or the first network element is a network exposure function network element, or the first network element is a multicast/broadcast service function network element.

With reference to the third aspect, in a possible design, the first network element is a multicast session management network element, and the second request message is further used for requesting to perform query on an access and mobility management function network element supporting MBS in the MBS service area. The method further includes: The network repository function network element determines, based on the second request message, the access and mobility management function network element supporting MBS in the MBS service area; and sends, to the first network element, information indicating the access and mobility management function network element supporting MBS in the MBS service area.

Based on this solution, the network repository function network element may further return, to the first network element in response to the second request message, the information indicating the access and mobility management function network element supporting MBS in the MBS service area, so that the first network element can obtain an AMF network element supporting MBS in the MBS service area, to prevent the first network element from requesting to create an MBS session from an AMF network element not supporting MBS, thereby reducing signaling and resource overheads.

According to a fourth aspect, a communication method is provided. The method may be performed by a network repository function network element, or may be performed by a component (for example, a processor, a chip, or a chip system) of a network repository function network element, or may be implemented by a logical module or software that can implement all or some functions of a network repository function network element. The following provides descriptions by using an example in which the network repository function network element is an execution entity of the method. The method includes: The network repository function network element receives a fourth request message from a first network element, where the fourth request message is for triggering the network repository function network element to return information about an area that supports an MBS in a multicast/broadcast service MBS service area; and the network repository function network element sends, to the first network element, second area information indicating the area supporting MBS in the MBS service area, where the second area information is used for determining first area information, and the first area information indicates an area not supporting MBS in the MBS service area.

Based on the communication method provided in embodiments of this application, the network repository function network element may send the second area information to the first network element in response to the fourth request message sent by the first network element, so that the first network element determines, based on the second area information, the area not supporting MBS in the MBS service area.

With reference to the fourth aspect, in a possible design, the first network element is a multicast session management network element, the fourth request message is for requesting to perform query on an access and mobility management function network element supporting MBS in the MBS service area, and the second area information indicates an area corresponding to the access and mobility management function network element supporting MBS in the MBS service area.

With reference to the fourth aspect, in a possible design, the first network element is a network exposure function network element or a multicast/broadcast service function network element, the fourth request message is for requesting to perform query on a multicast session management function network element in the MBS service area, and the second area information indicates an area corresponding to a multicast session management network element supporting MBS in the MBS service area.

With reference to the fourth aspect, in a possible design, the second area information includes identification information of a tracking area supporting MBS in the MBS service area; or the second area information includes identification information of a cell supporting MBS in the MBS service area.

With reference to the fourth aspect, in a possible design, the first area information includes identification information of a tracking area not supporting MBS in the MBS service area; or the first area information includes identification information of a cell not supporting MBS in the MBS service area.

According to a fifth aspect, a communication apparatus is provided to implement the foregoing methods. The communication apparatus may be the application function network element in the first aspect, or an apparatus including the application function network element, or an apparatus included in the application function network element, for example, a chip; or the communication apparatus may be the first network element in the second aspect, or an apparatus including the first network element, or an apparatus included in the first network element; or the communication apparatus may be the network repository function network element in the third aspect or the fourth aspect, or an apparatus including the network repository function network element, or an apparatus included in the network repository function network element.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a sixth aspect, a communication apparatus is provided, including a processor, where the processor is configured to execute instructions stored in a memory, and when the processor executes the instructions, the communication apparatus is enabled to perform the method according to any one of the foregoing aspects. The communication apparatus may be the application function network element in the first aspect, or an apparatus including the application function network element, or an apparatus included in the application function network element, for example, a chip; or the communication apparatus may be the first network element in the second aspect, or an apparatus including the first network element, or an apparatus included in the first network element, for example, a chip; or the communication apparatus may be the network repository function network element in the third aspect or the fourth aspect, or an apparatus including the network repository function network element, or an apparatus included in the network repository function network element, for example, a chip.

**In** a possible design, the communication apparatus further includes a memory, and the memory is configured to store computer instructions. Optionally, the processor and the memory are integrated together, or the processor and the memory are separately disposed.

**In** a possible design, the memory is coupled to the processor, and is outside the communication apparatus.

According to a seventh aspect, a communication apparatus is provided, including a processor and an interface circuit. The interface circuit is configured to communicate with a module outside the communication apparatus; and the processor is configured to perform the method according to any one of the foregoing aspects by using a logic circuit or by running a computer program or instructions. The communication apparatus may be the application function network element in the first aspect, or an apparatus including the application function network element, or an apparatus included in the application function network element, for example, a chip; or the communication apparatus may be the first network element in the second aspect, or an apparatus including the first network element, or an apparatus included in the first network element, for example, a chip; or the communication apparatus may be the network repository function network element in the third aspect or the fourth aspect, or an apparatus including the network repository function network element, or an apparatus included in the network repository function network element, for example, a chip.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method according to any one of the foregoing aspects.

**In** some possible designs, the communication apparatus may be a chip or a chip system.

According to an eighth aspect, a computer-readable storage medium is provided. The computer-readable storage medium stores instructions. When the instructions are run on a communication apparatus, the communication apparatus is enabled to perform the method according to any one of the foregoing aspects. The communication apparatus may be the application function network element in the first aspect, or an apparatus including the application function network element, or an apparatus included in the application function network element, for example, a chip; or the communication apparatus may be the first network element in the second aspect, or an apparatus including the first network element, or an apparatus included in the first network element, for example, a chip; or the communication apparatus may be the network repository function network element in the third aspect or the fourth aspect, or an apparatus including the network repository function network element, or an apparatus included in the network repository function network element, for example, a chip.

According to a ninth aspect, a computer program product including instructions is provided. When the computer program product runs on a communication apparatus, the communication apparatus is enabled to perform the method according to any one of the foregoing aspects. The communication apparatus may be the application function network element in the first aspect, or an apparatus including the application function network element, or an apparatus included in the application function network element, for example, a chip; or the communication apparatus may be the first network element in the second aspect, or an apparatus including the first network element, or an apparatus included in the first network element, for example, a chip; or the communication apparatus may be the network repository function network element in the third aspect or the fourth aspect, or an apparatus including the network repository function network element, or an apparatus included in the network repository function network element, for example, a chip.

According to a tenth aspect, a communication apparatus (for example, the communication apparatus may be a chip or a chip system) is provided, where the communication apparatus includes a processor, and is configured to implement a function involved in any one of the foregoing aspects. In a possible design, the communication apparatus further includes a memory, and the memory is configured to store necessary program instructions and data. When being a chip system, the communication apparatus may include a chip, or may include a chip and another discrete component.

For technical effects brought by any design manner in the fifth aspect to the tenth aspect, refer to the technical effects brought by different design manners in the first aspect and the second aspect. Details are not described herein again.

According to an eleventh aspect, a communication system is provided. The communication system includes an application function network element and a first network element. The application function network element is configured to perform the method according to the first aspect, and the first network element is configured to perform the method according to the second aspect.

With reference to the eleventh aspect, in a possible design, the communication system further includes a network repository function network element. The network repository function network element is configured to perform the method according to the third aspect or the fourth aspect.

### BRIEF DESCRIPTION OF DRAWINGS

FIG. 1 is a diagram of a multicast/broadcast architecture;
FIG. 2 is a diagram of a structure of a communication system according to an embodiment of this application;
FIG. 3 is a diagram of a structure of a communication apparatus according to an embodiment of this application;
FIG. 4 is an interaction diagram of a communication method according to an embodiment of this application;
FIG. 5 is a first schematic flowchart of a communication method according to an embodiment of this application;
FIG. 6 is a second schematic flowchart of a communication method according to an embodiment of this application;
FIG. 7 is a third schematic flowchart of a communication method according to an embodiment of this application;
FIG. 8 is a fourth schematic flowchart of a communication method according to an embodiment of this application;
FIG. 9 is a diagram of a structure of another communication apparatus according to an embodiment of this application; and
FIG. 10 is a diagram of a structure of another communication apparatus according to an embodiment of this application.

### DESCRIPTION OF EMBODIMENTS

For ease of understanding, the following briefly describes terms and related technologies in this application.

### 1. Multicast/broadcast architecture of a 5th generation (5th generation, 5G) system:

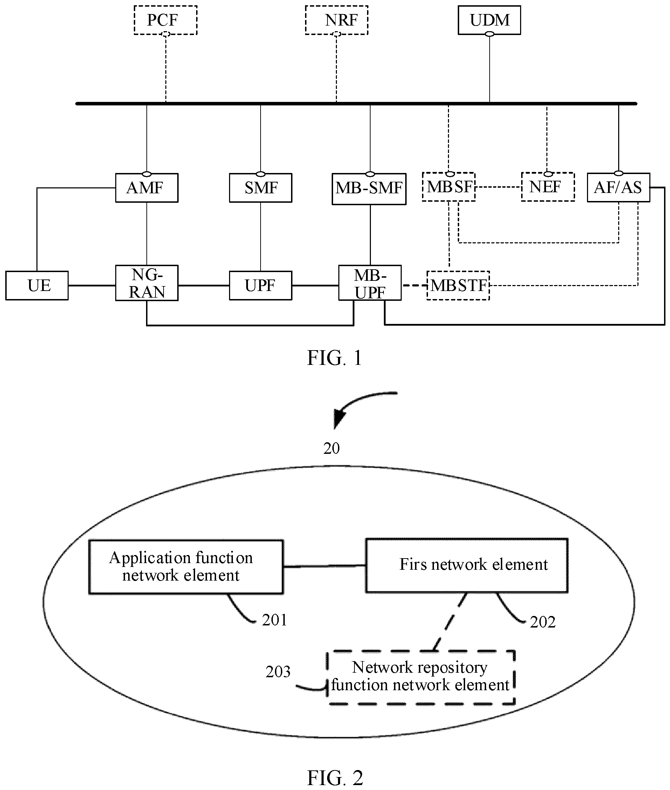

FIG. 1 shows interaction relationships between network functions and entities and corresponding interfaces in the multicast/broadcast architecture of the 5G system. As shown in FIG. 1, the multicast/broadcast architecture of the 5G system mainly includes user equipment (user equipment, UE), a next generation radio access network (next generation radio access network, NG-RAN) device, a user plane function (user plane function, UPF) network element, a multicast/broadcast user plane function (multicast/broadcast user plane function, MB-UPF) network element, an access management function (access management function, AMF) network element, a session management function (session management function, SMF), a multicast session management (multicast/broadcast session management function, MB-SMF) network element, an application function (application function, AF) network element/application server (application server, AS), and a unified data management (unified data management, UDM) network element. Optionally, the multicast/broadcast architecture of the 5G system may further include: a policy control function (policy control function, PCF) network element, a network exposure function (network exposure function, NEF) network element, a network repository function (network repository function, NRF) network element, a multicast and broadcast service function (multicast and broadcast service function, MBSF) network element, and a multicast and broadcast service transport function (multicast and broadcast transport function, MBSTF) network element.

The network function can be used as a network element running on dedicated hardware, or a software instance running on dedicated hardware, or a virtual function instantiated on a proper platform, for example, implemented on a cloud infrastructure device.

Main functions of the network elements are described in detail below.
(1) UE: In embodiments of this application, UE refers to a terminal device (terminal device) having a wireless communication function, and may include a handheld device, an in-vehicle device, a wearable device, a computing device, or another processing device connected to a wireless modem; and may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), and a handheld (handheld) device, a laptop computer (laptop computer), a cordless telephone (cordless phone), or a wireless local loop (wireless local loop, WLL) station, a machine type communication (machine type communication, MTC) terminal, a mobile station (mobile station, MS), or relay user equipment. The relay user equipment may be, for example, a 5G residential gateway (residential gateway, RG). The UE in embodiments of this application may alternatively be a terminal in various vertical industry application fields such as a terminal device of internet of things, a port, a smart factory, railway transportation, logistics, an unmanned aerial vehicle, and a self-driving car, for example, a mobile robot (Mobile Robot), an automated guided vehicle (Automated Guided Vehicle, AGV), a self-driving car, a control device and a sensor on a train, or a control device and a sensor (Sensor) deployed in a factory.
   In a multicast/broadcast architecture, the UE may receive multicast data in a point to point (point to point, PTP) or point to multi-point (point to multi-point, PTM) manner, or may receive multicast/broadcast data in a PTM manner.
(2) NG-RAN: The NG-RAN may include base stations in various forms, for example, a macro base station, a micro base station (also referred to as a "small cell"), and a distribute unit-control unit (distribute unit-control unit, DU-CU). In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The NG-RAN may also include a broadband network service gateway (broadband network gateway, BNG), an aggregation switch, a non-3GPP access device, and the like. A specific form and structure of the NG-RAN are not limited in embodiments of this application.

The NG-RAN is mainly responsible for functions such as radio resource management, uplink and downlink data classification, quality of service (quality of service, QoS) management, and data compression and encryption on an air interface side, completing signaling processing with a control plane network element, or completing data forwarding with a user plane function network element. In the multicast/broadcast architecture, the NG-RAN is mainly responsible for functions such as processing an MBS quality of service flow (quality of service flow, QoS flow), and sending data to the UE in a PTP or PTM manner.

(3) SMF network element: In the multicast/broadcast architecture, the SMF network element is mainly responsible for functions such as discovering the MB-SMF network element, interacting with the MB-SMF network element to manage a multicast session context, and interacting with the NG-RAN to create a multicast transmission resource.

(4) MB-SMF network element: In the multicast/broadcast architecture, the MB-SMF network element is mainly responsible for managing an MBS session (MBS session), for example, quality of service control (QoS control), MB-UPF configuration, and other functions. Specifically, for a broadcast service, the MB-SMF network element is further responsible for interacting with the NG-RAN to control transmission of a broadcast data stream. For a multicast service, the MB-SMF network element is further responsible for interacting with the SMF network element to associate a protocol data unit (protocol data unit, PDU) session (session), and interacting with the NG-RAN to control transmission of a multicast stream.

(5) AMF network element: In the multicast/broadcast architecture, the AMF network element is mainly responsible for functions such as signaling routing between the NG-RAN and the MB-SMF network element, and selecting an NG-RAN for broadcast.

For descriptions of functions of the UPF network element, the MB-UPF network element, the AF network element, the AS network element, the NEF network element, the NRF network element, the PCF network element, the MBSF network element, the MBSTF network element, the UDM network element, and the like, refer to explanations and descriptions in a conventional technology. Details are not described herein.

### 2. Transmission mode:

### (1) Multicast/broadcast transmission mode:

In embodiments of this application, multicast may also be referred to as multicast, and multicast/broadcast may be understood as "point to multi-point (point to multi-point, PTM) communication". At a service layer, a multicast/broadcast service means that data of the service is sent to a plurality of terminal devices. At a core network layer, multicast/broadcast transmission refers to sending service data of a multicast/broadcast service to a terminal device by using a multicast/broadcast session. Between network elements, multicast transmission means that there is a tunnel established for multicast between a source network element and a target network element (one possibility is that an IP address of the target network element is a multicast IP address, and another possibility is that the target network element receives, by joining a multicast tree, data sent by the source network element). For an air interface, air interface multicast/broadcast means that one piece of service data sent by an access network device may be received by the plurality of terminal devices at the same time and/or at a same frequency.

A difference between multicast transmission and broadcast transmission lies in that the multicast transmission is sending data to some specific receivers, and the broadcast transmission is sending data to all possible receivers in a network.

### (2) Unicast (unicast) transmission mode:

Unicast may be understood as "point to point" (point to point, PTP) communication. At a service layer, a unicast service means that data of the service is sent to a single terminal device. At a core network service layer, unicast transmission means that service data is sent to a terminal device by using a PDU session. Between network elements, the unicast transmission means that there is a unicast tunnel between a source network element and a target network element (that is, an IP address of the target network element is a unicast IP address). For an air interface, air interface unicast transmission means that an access network device sends service data to a single terminal device. It may be understood as that the access network device sends the service data to the single terminal device by using a radio bearer in an air interface unicast mode.

### 3. Basic transmission procedure of MBS data in a related area:

(1) An AF network element sends, to a core network, a request message for requesting to create an MBS session, where the request message includes information about an area in which the MBS session is requested to be created.

In this application, an area in which the MBS service AF network element requests to create the MBS session may be referred to as an MBS service area (MBS service area). For example, the AF network element requests a core network device (for example, an MB-SMF) to create an MBS session in a specific area. The area in which the AF network element requests to create the MBS session may be referred to as an MBS service area. The AF network element sends MBS data in the MBS service area in a multicast/broadcast transmission mode.

Optionally, that the AF network element requests the core network to create the MBS session in the MBS service area may be in response to a message that is sent by a terminal device to the AF network element and that is for requesting an MBS service. For example, the message sent by the terminal device for requesting the MBS service may include information such as location information of the terminal device, and an IP address or a port number of the terminal device.

Optionally, the AF network element collects the message from the terminal device for requesting the MBS service. When a quantity of terminal devices that request the MBS service is greater than a preset threshold, the AF network element sends, to the core network, the request message for requesting to create the MBS session, where the request message carries information about the MBS service area.

Optionally, after the MBS session is successfully created in the MBS service area, the AF network element sends a notification message to the terminal device, to notify that the MBS session is successfully created. For example, the notification message may include the information about the MBS service area, MBS session start time, and other information.

(2) In response to the request of the AF network element, the core network creates the MBS session in an area supporting MBS in the MBS service area.

Due to limited network capabilities, some areas may not support MBS. For an area not supporting MBS in the MBS service area, the core network may not create an MBS session.

(3) The AF network element transmits the MBS service data (the MBS service data may be referred to as MBS data for short) to a terminal device in the MBS service area in a multicast/broadcast transmission mode.

If a terminal device is located in an area served by a base station not supporting MBS in the MBS service area, the terminal device cannot successfully receive the MBS data, and the terminal device may be referred to as a first terminal device.

(4) After waiting for a specific period of time (for example, after a specific timer expires), the first terminal device feeds back, to the AF network element via an application layer, that the MBS data cannot be received. Further, after finding, based on the feedback of the first terminal device, that the first terminal device cannot successfully receive the MBS data, the AF network element sends the unsuccessfully transmitted MBS data to the first terminal device in a unicast mode, or requests the core network to adjust an area supporting MBS, to adjust the area not supporting MBS and in which the first terminal device is located to an area supporting MBS.

It can be learned that, in the foregoing process, the AF network element finds, based on the feedback message of the terminal device, the terminal device located in the area not supporting MBS. The procedure takes a long period of time, and consequently, the terminal device cannot receive the MBS data in a timely manner. Therefore, how to ensure that the terminal device receives the MBS data in a timely manner is an urgent problem to be resolved currently.

### 4. MBS service area:

The MBS service area may be an area in which an AF network element sends MBS data in a multicast/broadcast transmission mode, or may be an area in which the AF network element requests to create an MBS session.

Specifically, the MBS service area may be an area (for example, a service area of a base station or a TA area) in which a terminal device requesting an MBS service is located, or may be an area determined by the AF network element in another manner, for example, an area determined in a manner such as big data analysis, statistics collection, or preconfiguration. This is not limited.

For a broadcast service, the MBS service area may be an area to which broadcast service data is sent. A terminal device located in this area may receive the broadcast service data, and a terminal device located outside this area cannot receive the broadcast service data. For a multicast service, because multicast service data is for a terminal device, in other words, the multicast service data "follows" the terminal device, if there is no terminal device that requests the multicast service in a sub-area (for example, a cell) in the MBS service area, the multicast service data is not sent to the sub-area.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more unless otherwise specified. "At least one of the following items" or a similar expression thereof means any combination of these items, including a single item or any combination of a plurality of items. For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The technical solutions in embodiments of this application may be applied to various communication systems. The communication system may be a 3rd generation partnership project (3rd generation partnership project, 3GPP) communication system, for example, a long term evolution (long term evolution, LTE) system, or may be a 5G system, a new radio (new radio, NR) system, a vehicle to everything (vehicle to everything, V2X) system, or a future evolved communication system, or may be applied to a system in hybrid networking of LTE and 5G, or a device-to-device (device-to-device, D2D) communication system, a machine to machine (machine to machine, M2M) communication system, internet of things (internet of things, IoT), or another next-generation communication system, or may be a non-3GPP communication system. This is not limited.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

FIG. 2 is a diagram of an architecture of a communication system 20 according to an embodiment of this application. The communication system 20 includes an application function network element 201 and a first network element 202.

The first network element 202 is configured to obtain first area information, where the first area information indicates an area not supporting MBS in an MBS service area. The first network element 202 is further configured to send the first area information to the application function network element 201.

The application function network element 201 is configured to receive the first area information from the first network element 202. The application function network element 201 is further configured to transmit, in a unicast mode based on the first area information, data to a terminal device located in the area not supporting MBS in the MBS service area.

Optionally, the application function network element 201 and the first network element 202 may directly communicate with each other, or may communicate with each other through forwarding by another device. This is not limited in embodiments of this application.

Optionally, the communication system 20 may further include a network repository function network element 203.

The first network element 202 is configured to send a second request message to the network repository function network element 203, where the second request message is for triggering the network repository function network element 203 to return information about the area not supporting MBS in the MBS service area. The network repository function network element 203 is configured to send the first area information to the first network element 202, where the first area information indicates the area not supporting MBS in the MBS service area.

Alternatively, the first network element 202 is configured to send a fourth request message to the network repository function network element 203, where the fourth request message is for triggering the network repository function network element 203 to return information about an area supporting MBS in the MBS service area. The network repository function network element 203 is configured to send, to the first network element 202, second area information indicating the area supporting MBS in the MBS service area, where the second area information is used for determining the first area information.

Optionally, the first network element 202 and the network repository function network element 203 may directly communicate with each other, or may communicate with each other through forwarding by another device. This is not limited in embodiments of this application.

Specific implementations and technical effects of the solution are described in detail in subsequent method embodiments, and details are not described herein again.

Optionally, the communication system shown in FIG. 2 may be applied to the multicast/broadcast network architecture of the 5G system shown in FIG. 1, or may be applied to a future-evolved communication system. This is not specifically limited in embodiments of this application.

For example, if the communication system shown in FIG. 2 is applied to the multicast/broadcast network architecture of the 5G system shown in FIG. 1, a network element or entity corresponding to the application function network element 201 in FIG. 2 may be the AF network element in the network architecture shown in FIG. 1. A network element or entity corresponding to the first network element 202 may be the MB-SMF network element, the NEF network element, or the MBSF network element in the network architecture shown in FIG. 1, and a network element or entity corresponding to the network repository function network element 203 may be the NRF network element in the network architecture shown in FIG. 1. This is not specifically limited in embodiments of this application.

Optionally, the application function network element, the first network element, or the network repository function network element in embodiments of this application may also be referred to as a communication apparatus, and may be a general-purpose device or a dedicated device. This is not specifically limited in embodiments of this application.

Optionally, related functions of the application function network element, the first network element, or the network repository function network element in embodiments of this application may be implemented by one device, or may be implemented by a plurality of devices together, or may be implemented by one or more function modules in one device. This is not specifically limited in embodiments of this application. It may be understood that the foregoing function may be a network component in a hardware device, a software function running on dedicated hardware, a combination of hardware and software, or a virtualized function instantiated on a platform (for example, a cloud platform).

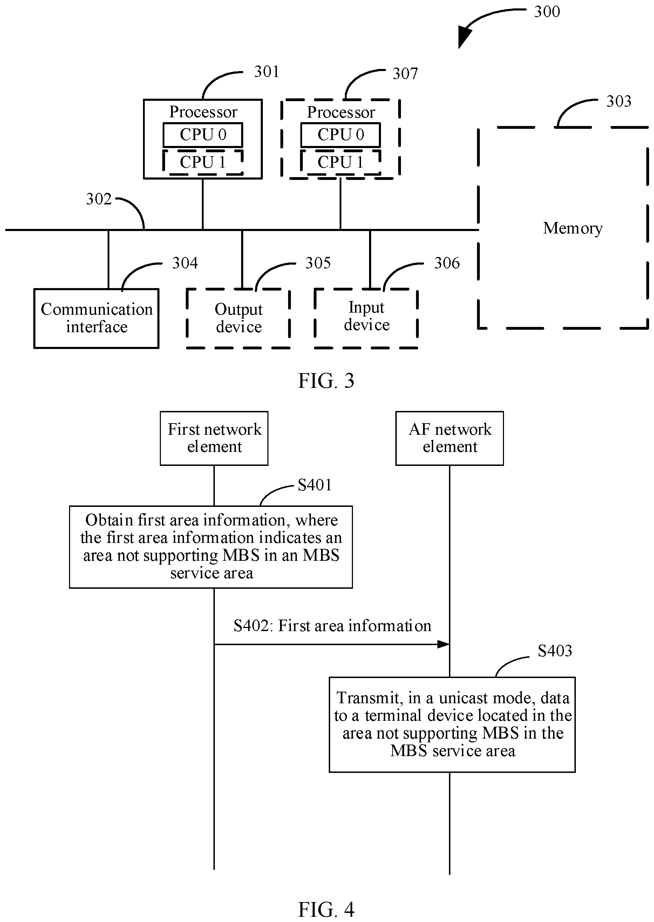

For example, the related functions of the application function network element, the first network element, or the network repository function network element in embodiments of this application may be implemented by using a communication device 300 in FIG. 3. FIG. 3 is a diagram of a structure of a communication device 300 according to an embodiment of this application. The communication device 300 includes one or more processors 301, a communication line 302, and at least one communication interface (in FIG. 3, only an example in which a communication interface 304 and one processor 301 are included is used for description). Optionally, the communication device 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for connecting different components.

The communication interface 304 may be a transceiver module configured to communicate with another device or a communication network such as the Ethernet, a RAN, or a wireless local area network (wireless local area network, WLAN). For example, the transceiver module may be an apparatus such as a transceiver machine or a transceiver. Optionally, the communication interface 304 may alternatively be a transceiver circuit located inside the processor 301, and is configured to implement signal input and signal output of the processor.

The memory 303 may be an apparatus having a storage function. Optionally, the memory 303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 303 may exist independently, and is connected to the processor 301 through the communication line 302. The memory 303 may alternatively be integrated with the processor 301.

The memory 303 is configured to store computer-executable instructions for executing the solutions in this application under control of the processor 301. The processor 301 is configured to execute the computer-executable instructions stored in the memory 303, to implement the communication method performed by each device in method embodiments of this application.

The communication interface 304 is responsible for communicating with another device or communication network. This is not specifically limited in embodiments of this application.

Optionally, the computer-executable instructions in embodiments of this application may also be referred to as application program code. This is not specifically limited in embodiments of this application.

During a specific implementation, in an embodiment, the processor 301 may include one or more CPUs such as a CPU 0 and a CPU 1 in FIG. 3.

In a specific implementation, in an embodiment, the communication device 300 may include a plurality of processors, for example, the processor 301 and a processor 307 in FIG. 3. Each of these processors may be a single-core (single-core) processor, or may be a multi-core (multi-core) processor. The processor may include but is not limited to at least one of the following computing devices that run various types of software: a central processing unit (central processing unit, CPU), a microprocessor, a digital signal processor (digital signal processor, DSP), a microcontroller unit (microcontroller unit, MCU), an artificial intelligence processor, and the like. Each computing device may include one or more cores for executing software instructions to perform an operation or processing.

During a specific implementation, in an embodiment, the communication device 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input by a user in a plurality of manners. For example, the input device 306 may be a mouse, a keyboard, a touchscreen device, or a sensor device.

The communication device 300 may also be referred to as a communication apparatus sometimes, and may be a general-purpose device or a dedicated device. For example, the communication device 300 may be a desktop computer, a portable computer, a network server, a palmtop computer (palmtop computer), a mobile phone, a tablet computer, a wireless terminal device, an embedded device, the foregoing terminal device, the foregoing network device, or a device having a structure similar to that in FIG. 3. A type of the communication device 300 is not limited in embodiments of this application.

With reference to FIG. 1 to FIG. 3, the following describes in detail the communication method provided in embodiments of this application by using an example in which the application function network element 201 and the first network element 202 shown in FIG. 2 interact with each other.

It should be noted that names of messages between network elements, names of parameters in the messages, or the like in the following embodiments of this application are merely examples, and there may be other names in a specific implementation. This is not specifically limited in embodiments of this application.

FIG. 4 shows a communication method according to an embodiment of this application. The communication method includes S401 to S403.

S401: A first network element obtains first area information.

The first area information may indicate an area not supporting MBS in an MBS service area.

A granularity of the area not supporting MBS may be a cell, a tracking area (tracking area, TA), a service area of a base station, or the like. Correspondingly, the first area information may include identification information of a cell not supporting MBS in the MBS service area, identification information of a tracking area not supporting MBS in the MBS service area, identification information of a service area of a base station not supporting MBS in the MBS service area, or identification information of an area of another granularity not supporting MBS. It is clear that a combination of various granularities may alternatively be used. This is not limited.

It should be noted that all "identification information" in this application has an identification function. For example, identification information of A is for identifying A. Details are not described subsequently.

Specifically, the first area information may be one or more of the following: a cell identity (identity, ID), a base station ID, a TA ID, and the like; or may be geographical coordinates, or may be information such as a frequency selection area (frequency selection area) ID and a civic address (civic address).

The area not supporting MBS may be an area not supporting an MBS function, may be a service area corresponding to a network element not supporting an MBS function, or may be a preconfigured area, or the like. Specifically, there may be the following several cases, and this is not limited.

Case 1: If a network element needed for transmitting MBS service data is absent in an area, the area may be referred to as an area not supporting MBS. For example, if an AMF network element needed for transmitting the MBS service data is absent in an area 1, the area 1 may be referred to as an area not supporting MBS.

Case 2: If a network element not supporting an MBS function exists in network elements that serve an area, the area may be referred to as an area not supporting MBS. For example, if a base station that serves an area 2 does not support MBS (or a base station corresponding to an area 2 does not support MBS), the area 2 may be referred to as an area not supporting MBS.

Case 3: If a network element (for example, a base station) does not support MBS, an area corresponding to the network element may be referred to as an area not supporting MBS.

Case 4: If a network element (for example, a base station) does not support MBS in an area corresponding to the network element, the area may be referred to as an area not supporting MBS.

Case 5: If an area is pre-planned as an area that cannot provide an MBS service, the area may be referred to as an area not supporting MBS. For example, although a base station supports MBS, a network sets that a cell of the base station does not provide the MBS service, and the cell may be referred to as an area not supporting MBS.

In this embodiment of this application, a terminal device located in an area not supporting MBS cannot receive MBS service data.

The first network element may be an MB-SMF network element, an NEF network element, or an MBSF network element. This is not limited.

S402: The first network element sends the first area information to an AF network element.

Correspondingly, the AF network element receives the first area information from the first network element.

If the first network element is an MB-SMF network element, the MB-SMF network element may send the first area information to the AF network element via an NEF network element/MB SF network element. In other words, the MB-SMF network element may send the first area information to the NEF network element/MBSF network element, and then the NEF network element/MBSF network element sends the first area information to the AF network element.

If the first network element is an NEF network element/MBSF network element, the NEF network element/MBSF network element may send the first area information to the AF network element.

S403: The AF network element transmits, in a unicast mode based on the first area information, data to a terminal device located in the area not supporting MBS in the MBS service area.

In a possible manner, the AF network element determines, based on the first area information, an access network device corresponding to the area not supporting MBS in the MBS service area, and sends the MBS service data to the access network device by using a PDU session. After receiving the MBS service data, the access network device sends the MBS service data to the terminal device in a unicast mode.

In another possible manner, the AF network element determines, based on the first area information and location information of the terminal device that is obtained from the terminal device, a terminal device that needs to receive data in a unicast mode (for example, the first area information is a list or a set of cell identities, and the AF network element determines, based on the location information of the terminal device, a terminal device in the list or the set of cell identities included in the first area information). Then, the AF network element transmits data to the terminal device by using a unicast PDU session corresponding to the terminal device.

That the access network device or the AF network element transmits, in a unicast mode, data to the terminal device located in the area not supporting MBS may also be referred to as that the access network device or the AF network element sends a unicast data packet to the terminal device located in the area not supporting MBS. The unicast data packet can be received and decoded only by a specific terminal device.

According to the communication method provided in the foregoing embodiment, the first network element obtains the first area information, and sends the first area information to the AF network element, and then the AF network element transmits, in a unicast mode based on the first area information, data to the terminal device located in the area not supporting MBS in the MBS service area. It can be learned that, according to the method, the AF network element can directly send, in a unicast mode without waiting for feedback of the terminal device, MBS data to the terminal device in the area not supporting MBS. This greatly reduces a delay in receiving the MBS service by the terminal device in the area not supporting MBS, and improves user experience.

Optionally, in a possible implementation of the foregoing embodiment, before step S401, the method further includes: The AF network element sends a first request message to the first network element, where the first request message is for requesting to create an MBS session in the MBS service area, and the first request message includes information about the MBS service area.

Optionally, that the AF network element sends the first request message to the first network element may be in response to a message that is sent by the terminal device to the AF network element and that is for requesting an MBS service. The MBS service request sent by the terminal device may include information such as the location information of the terminal device, and an IP address or a port number of the terminal device.

Optionally, when the terminal device sends, to the AF network element, the message for requesting the MBS service, the AF network element may collect the message that is for requesting the MBS service and that is from the terminal device. When a quantity of terminal devices that request the MBS service is greater than a preset threshold, the AF network element sends the first request message to the first network element.

Optionally, when the terminal device sends, to the AF network element, the message for requesting the MBS service, the AF network element may determine an area in which the terminal device requesting the MBS service is located as the MBS service area.

Optionally, the AF network element may determine the MBS service area in another manner, for example, in a manner such as big data analysis, statistics collection, or preconfiguration. This is not limited in this embodiment of this application.

Optionally, after the MBS session is successfully created in the MBS service area, the AF network element may send a notification message to the terminal device located in the MBS service area, to notify that the MBS session is successfully created. The notification message may include the information about the MBS service area, MBS session start time, and other information.

S401 includes: In response to the first request message, the first network element obtains the first area information.

S402 includes: The first network element includes the first area information in a response message of the first request information.

The first request message may be an MBS session create request (for example, MBSSession_CreateRequest) message.

Specifically, the first request message may include one or more of the following information: area information of the MBS service area, identification information of the MBS service area, identification information of a multicast session, and identification information of the MBS service.

The area information of the MBS service area may be identification information of an area included in the MBS service area, to indicate the area included in the MBS service area. For example, the area information of the MBS service area may be identification information of a cell included in the MBS service area, for example, a cell identity (Cell ID), or identification information of a tracking area (tracking area, TA) included in the MBS service area, for example, a tracking area identity (tracking area identity, TAI).

The identification information of the MBS service area is for identifying the MBS service area. Further, the identification information of the MBS service area may indicate a corresponding area, that is, the MBS service area. Specifically, there is a mapping relationship between the identification information and area information of the MBS service area, and the area corresponding to the identification information of the MBS service area is determined as the MBS service area. For example, it is assumed that, in a mapping relationship preconfigured in the first network element, area information corresponding to identification information A of the MBS service area includes a TAI 1 and a TAI 2, and area information corresponding to identification information B of the MBS service area includes a TA 3 and a TA 4. If the first request message received by the first network element carries the identification information A, the first network element may determine, based on the mapping relationship, that the MBS service area includes a TAI and a TA 2.

The area information of the MBS service area and/or the identification information of the MBS service area may be used by the first network element to determine the first area information. For details, refer to manner 1 described below.

The identification information of the multicast session may be information such as an MBS session ID (MBS session ID) or a temporary multicast group identifier (temporary multicast group identifier, TMGI). The identification information of the MBS service may be information for identifying an application server that provides the MBS service, for example, an application function identifier (application function ID), or information for identifying the MBS service, for example, an application identifier (application ID), an AF application ID, or packet filtering (packet filtering) information of application data.

It should be noted that the identification information of the multicast session or the identification information of the MBS service may also indicate the MBS service area. Specifically, the first network element may determine, based on a mapping relationship between the identification information of the multicast session or the identification information of the MBS service and corresponding area information, an area corresponding to the identification information of the multicast session or the identification information of the MBS service as the area included in the MBS service area. Alternatively, the first network element may determine, based on a mapping relationship between the identification information of the multicast session or the identification information of the MBS service and corresponding identification information, identification information corresponding to the identification information of the multicast session or the identification information of the MBS service as the identification information of the MBS service area. The mapping relationship between the identification information of the multicast session or the identification information of the MBS service and the corresponding area information, and/or the mapping relationship between the identification information of the multicast session or the identification information of the MBS service and the corresponding identification information may be configured in the first network element by an MBS service provider and an operator in a manner such as subscription.

The following describes a specific implementation of obtaining the first area information by the first network element in S401.

Manner 1: The first network element determines the first area information based on the area information of the MBS service area and/or the identification information of the MBS service area.

Specifically, the first network element determines the first area information based on the area information of the MBS service area and the preconfigured information about the area not supporting MBS. For example, it is assumed that the area information of the MBS service area includes a TAI 1, a TAI 2, a TAI 3, and a TAI 4. The information that is preconfigured in the first network element and that is about the area not supporting MBS includes the TAI 1 and a TAI 5. The first network element determines that, in the TAI 1, the TAI 2, the TAI 3, and the TAI 4, a TA corresponding to the TAI 1 does not support MBS. In other words, the first area information is the TAI 1.

Alternatively, the first network element determines the first area information based on the identification information of the MBS service area and a preconfigured mapping relationship between the identification information of the MBS service area and the area not supporting MBS in the MBS service area. For example, it is assumed that the identification information of the MBS service area is A. In the mapping relationship that is preconfigured in the first network element and that is between the identification information of the MBS service area and the area not supporting MBS in the MBS service area, the identification information A corresponds to the TAI 1 and the TAI 2, and the first network element determines that the first area information includes the TAI 1 and the TAI 2.

Manner 2: The first network element requests the first area information from an NRF network element.

For example, the first network element sends a second request message to the NRF network element, where the second request message is for triggering the NRF network element to return information about the area not supporting MBS in the MBS service area. After receiving the second request message, the NRF network element determines, based on the second request message, the information about the area not supporting MBS in the MBS service area, to obtain the first area information. Then, the NRF network element sends a response message of the second request message (which may also be referred to as a second response message) to the first network element, where the response message includes the first area information. The second request message may include at least one of the area information of the MBS service area, the identification information of the MBS service area, the identification information of the multicast session, and the identification information of the MBS service.

Further, the NRF network element may determine the first area information based on at least one of the area information of the MBS service area, the identification information of the MBS service area, the identification information of the multicast session, and the identification information of the MBS service. Details are separately described below.

When the second request message includes the area information of the MBS service area, and the NRF network element is preconfigured with the information about the area not supporting MBS in the MBS service area, the NRF network element may perform, based on the area information of the MBS service area, query on the information about the area not supporting MBS in the MBS service area, to obtain the first area information.

Optionally, the information that is preconfigured for the NRF network element and that is about the area not supporting MBS in the MBS service area is configured in the NRF network element by the MBS service provider and the operator in a manner such as subscription.

When the second request message includes the area information of the MBS service area, and the NRF network element is preconfigured with information about an area supporting MBS in the MBS service area, the NRF network element may determine, based on the area information of the MBS service area, information about an area other than the area supporting MBS in the MBS service area as the first area information.

For example, it is assumed that the area information of the MBS service area in the second request message includes a TAI 1, a TAI 2, a TAI 3, and a TAI 4. The NRF network element stores a table including the area information and information indicating whether an area supports MBS. The NRF network element queries the table, and determines that, in the TAI 1, the TAI 2, the TAI 3, and the TAI 4, the TAI 1 and the TAI 3 do not support MBS, and the TAI 2 and the TAI 4 support MBS. The NRF network element determines that the first area information includes the TAI 1 and the TAI 3, and includes the first area information in the second response message and sends the second response message to the first network element.

When the second request message includes the identification information of the MBS service area, and the NRF network element is preconfigured with a mapping relationship between the identification information of the MBS service area and the area not supporting MBS in the MBS service area, the NRF network element may determine, based on the identification information of the MBS service area and the mapping relationship, information about an area corresponding to the identification information of the MBS service area as the first area information.

For example, it is assumed that the identification information of the MBS service area in the second request message is A. The NRF network element stores the mapping relationship between the identification information of the MBS service area and the area not supporting MBS in the MBS service area. The NRF network element queries the mapping relationship, and determines that area information corresponding to the identity A includes a TAI 1 and a TAI 3. The NRF network element determines that the first area information includes the TAI 1 and the TAI 3, and includes the first area information in the second response message and sends the second response message to the first network element.

When the second request message includes the identification information of the MBS service or the identification information of the multicast session, and the NRF network element is preconfigured with a mapping relationship between the identification information of the MBS service or the identification information of the multicast session and the MBS service area, and a mapping relationship between the MBS service area and the area not supporting MBS in the MBS service area, the NRF network element may determine, based on the identification information of the MBS service or the identification information of the multicast session, and the preconfigured mapping relationship between the identification information of the MBS service or the identification information of the multicast session and the MBS service area, the MBS service area corresponding to the identification information of the MBS service or the identification information of the multicast session, and further determine, based on the mapping relationship between the MBS service area and the area not supporting MBS in the MBS service area, information about the area corresponding to the MBS service area as the first area information.

The mapping relationship between the identification information of the MBS service and the MBS service area may be a mapping relationship between the identification information of the MBS service and the identification information of the MBS service area, or may be a mapping relationship between the identification information of MBS service and the area information of the MBS service. The mapping relationship between the MBS service area and the area not supporting MBS in the MBS service area may be a mapping relationship between the identification information of the MBS service area and the information about the area not supporting MBS in the MBS service area, or may be a mapping relationship between the area information of the MBS service area and the information about the area not supporting MBS in the MBS service area.

For example, it is assumed that the identification information of the MBS service in the second request message is B. The NRF network element stores the mapping relationship between the identification information of the MBS service and the identification information of the MBS service area, and the mapping relationship between the identification information of the MBS service area and the area not supporting MBS in the MBS service area. The NRF network element queries the stored mapping relationships, and determines that the identification information of the MBS service area corresponding to the identity B is C, and the area information corresponding to the identity C includes a TAI 1 and a TAI 2. The NRF network element determines that the first area information includes the TAI 1 and the TAI 2, and includes the first area information in the second response message and sends the second response message to the first network element.

It should be noted that, in a scenario of manner 2, the first network element may be an MB-SMF network element, and the second request message may be specifically for requesting to perform query on an AMF network element supporting MBS in the MBS service area. Further, the NRF network element may perform, based on the second request message, query on the AMF network element that supports MBS in the MBS service area, to include, in the second response message, information indicating the AMF network element supporting MBS in the MBS service area, and send the second response message to the MB-SMF network element. The MB-SMF network element may send, based on the second response message, a third request message to the AMF network element supporting MBS in the MBS service area, to request to create the MBS session from the AMF network element supporting MBS in the MBS service area.

In this case, an existing message for discovering a network element may be reused as the second request message. For example, the second request message may be a network element discovery request (Nnrf_NFDiscovery_Request) message. Alternatively, the second request message may be a newly defined message. This is not limited in this embodiment of this application.

In a possible implementation, the information indicating the AMF network element supporting MBS in the MBS service area may include identification information of the AMF network element supporting MBS in the MBS service area. The MB-SMF network element may directly determine, based on the identification information of the AMF network element supporting MBS in the MBS service area, the AMF network element supporting MBS in the MBS service area. Further, the second response message may further include identification information of each AMF network element in the MBS service area and/or identification information of an AMF network element not supporting MBS in the MBS service area.

In another possible implementation, the information indicating the AMF network element supporting MBS in the MBS service area may include identification information of all AMF network elements in the MBS service area and identification information of an AMF network element not supporting MBS in the MBS service area. Further, the MB-SMF network element may determine an AMF network element other than the AMF network element not supporting MBS in all AMF network elements in the MBS service area as the AMF network element supporting MBS. Further, the second response message may further include identification information of the AMF network element supporting MBS in the MBS service area.

Optionally, if the second response message includes the information indicating the AMF network element supporting MBS in the MBS service area, the second response message may further include area information corresponding to the AMF network element. For example, the area information corresponding to the AMF network element may be identification information of a cell corresponding to the AMF network element or identification information of a tracking area corresponding to the AMF network element.

According to the foregoing method, the MB-SMF network element may obtain the AMF network element supporting MBS in the MBS service area, and request to create the MBS session from the AMF network element supporting MBS, to avoid requesting to create the MBS session from the AMF network element not supporting MBS. In this way, signaling and resource overheads are reduced.

Manner 3: The first network element receives second area information from an NRF network element, where the second area information indicates an area supporting MBS in the MBS service area. The first network element determines, based on the area information of the MBS service area and the second area information, an area other than the area supporting MBS in the MBS service area as the area not supporting MBS, to obtain the first area information.

For example, the second area information may include information about the area supporting MBS in an area included in the MBS service area, for example, identification information of a tracking area supporting MBS in the MBS service area, or the second area information may include identification information of a cell supporting MBS in the MBS service area.

For example, assuming that the MBS service area includes a TAI 1, a TAI 2, a TAI 3, and a TAI 4, and the second area information received by the first network element includes the TAI 1 and the TAI 2, the first network element may determine the TAI 3 and the TAI 4 as areas not supporting MBS in the MBS service area.

Optionally, the first network element sends a fourth request message to the NRF network element, where the fourth request message is for triggering the NRF network element to send the second area information to the first network element. Further, after receiving the fourth request message, the NRF network element determines, based on the fourth request message, the information about the area supporting MBS in the MBS service area, to obtain the second area information. Then, the NRF network element sends a response message of the fourth request message (which may also be referred to as a fourth response message) to the first network element, where the response message includes the second area information.

Optionally, in a scenario of manner 3, the first network element is an MB-SMF network element, and the fourth request message is specifically for requesting to perform query on an AMF network element supporting MBS in the MBS service area. After receiving the fourth request message, the NRF network element queries information about the AMF network element supporting MBS in the MBS service area, to obtain the second area information. The second area information indicates an area corresponding to the AMF network element supporting MBS in the MBS service area. The NRF network element includes the second area information in the response message (which may also be referred to as the fourth response message) of the fourth request message, and sends the response message to the MB-SMF network element. In this case, an existing message for discovering a network element may be reused as the fourth request message. For example, the fourth request message may be an Nnrf_NFDiscovery_Request message. Alternatively, the fourth request message may be a newly defined message. This is not limited in embodiments of this application.

Specifically, the second area information may include information about the area corresponding to the AMF network element supporting MBS in the MBS service area, for example, may be identification information of a tracking area or identification information of a cell corresponding to the AMF network element supporting MBS in the MBS service area. After receiving the second area information, the MB-SMF network element may directly determine the area corresponding to the AMF network element supporting MBS in the MBS service area as the area supporting MBS in the MBS service area. Alternatively, the second area information may include identification information of the AMF network element supporting MBS in the MBS service area. After receiving the second area information, the MB-SMF network element may determine, based on a preconfigured mapping relationship between identification information of an AMF network element and corresponding area information, an area corresponding to the identification information of the AMF network element supporting MBS in the MBS service area as the area supporting MBS in the MBS service area. Then, the MB-SMF network element may determine an area other than the area supporting MBS in the MBS service area as the area not supporting MBS.

Optionally, the fourth response message may further include information indicating the AMF network element supporting MBS in the MBS service area. The MB-SMF network element may send, based on the information indicating the AMF network element supporting MBS in the MBS service area, a third request message to the AMF network element supporting MBS in the MBS service area, to request to create the MBS session from the AMF network element supporting MBS in the MBS service area.

According to the foregoing method, the MB-SMF network element may obtain the AMF network element supporting MBS in the MBS service area, and request to create the MBS session from the AMF network element supporting MBS, to avoid requesting to create the MBS session from an AMF network element not supporting MBS. In this way, signaling and resource overheads are reduced.

Optionally, in another scenario of the manner 3, the first network element is an NEF network element/MBSF network element, and the fourth request message is specifically for requesting to perform query on an MB-SMF network element in the MBS service area. After receiving the fourth request message, the NRF network element queries the information about the MB-SMF network element in the MBS service area, to obtain the second area information. The second area information indicates an area corresponding to the MB-SMF network element in the MBS service area. The NRF network element includes the second area information to the response message (which may also be referred to as the fourth response message) of the fourth request message, and sends the response message to the NEF network element/MBSF network element. In this case, an existing message for discovering a network element may be reused as the fourth request message. For example, the fourth request message may be an Nnrf_NFDiscovery Request message. Alternatively, the fourth request message may be a newly defined message for implementing this function. This is not limited in this embodiment of this application.

Specifically, the second area information may be information about the area corresponding to the MB-SMF network element in the MBS service area, for example, may be identification information of a tracking area or identification information of a cell corresponding to the MB-SMF network element in the MBS service area. After receiving the second area information, the NEF network element/MBSF network element may determine the area corresponding to the MB-SMF network element in the MBS service area as the area supporting MBS in the MBS service area. Alternatively, the second area information may be identification information of the MB-SMF network element in the MBS service area. After receiving the second area information, the NEF network element/MBSF network element may determine, based on a preconfigured mapping relationship between the identification information of the MB-SMF network element and corresponding area information, an area corresponding to identification information of an MB-SMF network element supporting MBS in the MBS service area as the area supporting MBS in the MBS service area. Then, the NEF network element/MBSF network element may determine an area other than the area supporting MBS in the MBS service area as the area not supporting MBS.

Optionally, when the fourth response message includes the identification information of the MB-SMF network element in the MBS service area, the NEF network element/MBSF network element may select a target MB-SMF network element from the MB-SMF network element in the MBS service area based on the fourth response message, to request the target MB-SMF network element to allocate a temporary multicast group identifier (temporary multicast group identifier, TMGI).

It should be noted that the communication method provided in this embodiment of this application is described by using the AF network element as an example. If the AF network element is replaced with an AS network element, the method in this embodiment of this application is also applicable.

Actions of the first network element, the NRF network element, or the AF network element in steps S401 to S403 may be performed by the processor 301 in the communication device 300 shown in FIG. 3 by invoking application program code stored in the memory 303. This is not limited in this embodiment of this application.

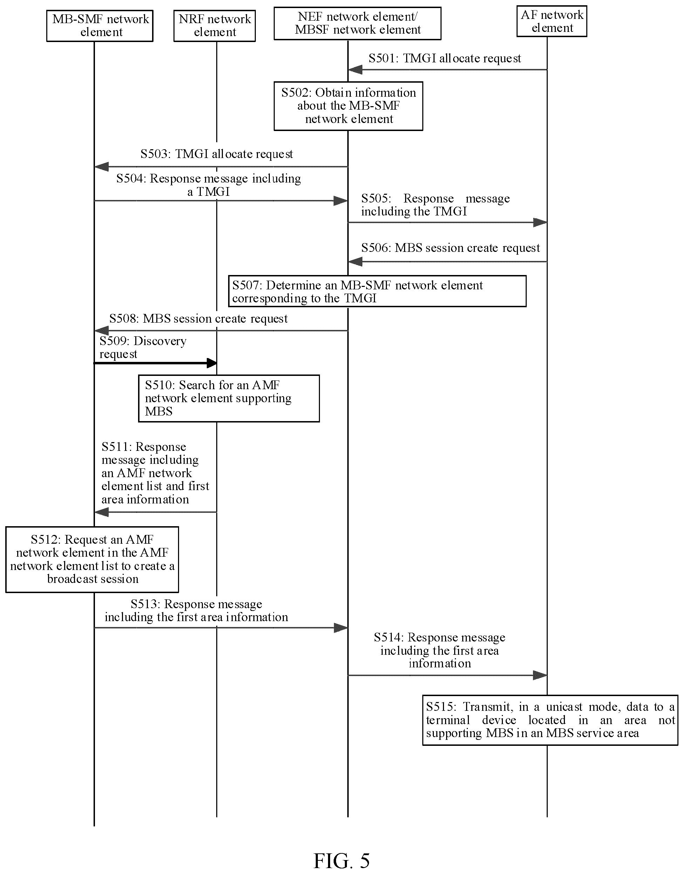

For ease of understanding, the following explains a procedure of the communication method provided in embodiments of this application with reference to the accompanying drawings. In a possible implementation, as shown in FIG. 5, assuming that a first network element is an MB-SMF network element, the communication method provided in this embodiment of this application may include the following steps.

S501: An AF network element sends a TMGI allocate request (Nnef_TMGI_allocate request) message to an NEF network element/MBSF network element, where the message is for requesting a core network to allocate a TMGI.

S502: The NEF network element/MBSF network element performs authentication on the request of the AF network element, and if the authentication on the AF network element succeeds, the NEF network element/MBSF network element may obtain information about the MB-SMF network element by performing query on an NRF network element or a local configuration.

For a specific implementation of the authentication performed by the NEF network element/MBSF network element on the AF network element, refer to an existing implementation. Details are not described herein.

S503: The NEF network element/MBSF network element sends a TMGI allocate request message to the MB-SMF network element, where the message is for requesting the MB-SMF network element to allocate the TMGI.

S504: The MB-SMF network element returns a response message of the TMGI allocate request message to the NEF network element/MBSF network element, where the response message includes the TMGI allocated by the MB-SMF network element.

S505: The NEF network element/MBSF network element returns a response message of the Nnef_TMGI_allocate request message to the AF network element, where the response message includes the allocated TMGI.

S506: The AF network element sends an MBS session create request (Nnef_MBSSession_Create request) message to the NEF network element/MBSF network element, to request to create an MBS session in an MBS service area (MBS service area), where the message includes the allocated TMGI and information about the MBS service area.

S507: The NEF network element/MBSF network element determines the corresponding MB-SMF network element based on the TMGI in the MBS session create request message. Optionally, the MB-SMF network element corresponding to the TMGI may be determined in one of the following two manners:
Manner 1: The NEF network element/MBSF network element determines, based on a locally configured mapping relationship between the TMGI and the MB-SMF network element, the MB-SMF network element corresponding to the TMGI.
Manner 2: The NEF network element/MBSF network element queries the NRF network element for the MB-SMF corresponding to the TMGI, to obtain the MB-SMF network element corresponding to the TMGI.
S508: The NEF network element/MBSF network element sends an MBS session create request (Nmbsmf_MBSSession_CreateRequest) message to the MB-SMF network element, where the message includes the TMGI and the information about the MBS service area.
S501 to S508 are optional steps for triggering the MB-SMF network element to obtain first area information, in other words, S501 to S508 are a possible implementation for triggering the MB-SMF network element to obtain the first area information.
S509: The MB-SMF network element sends a network element discovery request (Nnrf_NFDiscovery_Request) message to the NRF network element, where the message is for requesting to perform query on an AMF network element that supports an MBS in the MBS service area, and the message includes the information about the MBS service area.
S510: The NRF network element searches, based on the information about the MBS service area, for the corresponding AMF network element supporting MBS.
S511: The NRF network element returns a response message of the Nnrf_NFDiscovery_Request message: an Nnrf_NFDiscovery_Response message, to the MB-SMF network element, where the response message includes the following information:
   an AMF network element list, where the list includes identification information of AMF network elements supporting MBS in the MBS service area, and a TAI of a tracking area not supporting MBS or a Cell ID of a cell not supporting MBS in the MBS service area (that is, the first area information). Optionally, a TAI or a Cell ID corresponding to each AMF network element in the AMF network element list may be further included.
S512: Optionally, the MB-SMF network element sends a broadcast session create request message to all or some AMF network elements in the AMF network element list returned by the NRF network element, to request to create a broadcast session.
S513: The MB-SMF network element sends a response message of the Nmbsmf_MBSSession_CreateRequest message to the NEF network element/MBSF network element, where the response message includes the TAI of the tracking area not supporting MBS or the Cell ID of the cell not supporting MBS in the MBS service area.
S514: The NEF network element/MBSF network element sends a response message of the Nnef_MBSSession_Create request message to the AF network element, where the response message includes the TAI of the tracking area not supporting MBS or the Cell ID of the cell not supporting MBS in the MBS service area.
S515: The AF network element transmits, in a unicast mode based on the TAI of the tracking area not supporting MBS or the Cell ID of the cell not supporting MBS in the MBS service area, data to a terminal device located in the tracking area or the cell not supporting MBS in the MBS service area.

For specific implementations of S509 to S515, refer to the foregoing descriptions of S401 to S403. Details are not described herein again.

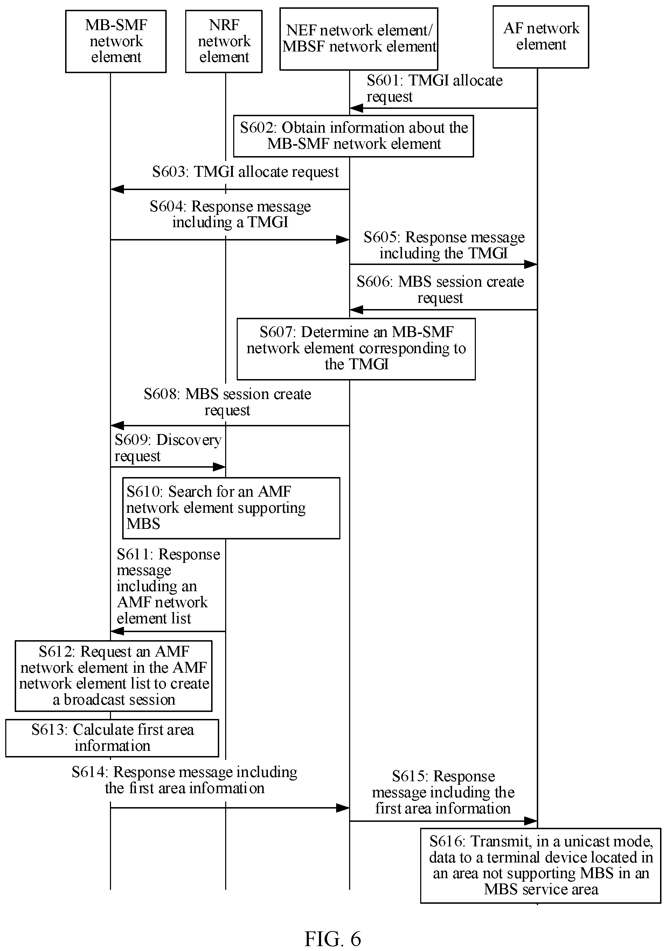

In another possible implementation, as shown in FIG. 6, assuming that a first network element is an MB-SMF network element, the communication method provided in this embodiment of this application may include the following steps.

S601: An AF network element sends a TMGI allocate request (Nnef_TMGI_allocate request) message to an NEF network element/MBSF network element, where the message is for requesting a core network to allocate a TMGI.

S602: The NEF network element/MBSF network element performs authentication on the request of the AF network element. If the authentication on the AF network element succeeds, the NEF network element/MBSF network element may obtain information about the MB-SMF network element. For details, refer to the foregoing descriptions of S502. Details are not described herein again.

S603: The NEF network element/MBSF network element sends a TMGI allocate request message to the MB-SMF network element, where the message is for requesting the MB-SMF network element to allocate the TMGI.

S604: The MB-SMF network element returns a response message of the TMGI allocate request message to the NEF network element/MBSF network element, where the response message includes the TMGI allocated by the MB-SMF network element.

S605: The NEF network element/MBSF network element returns a response message of the Nnef_TMGI_allocate request message to the AF network element, where the response message includes the allocated TMGI.

S606: The AF network element sends an MBS session create request (Nnef_MBSSession_Create request) message to the NEF network element/MBSF network element, to request to create an MBS session in an MBS service area (MBS service area), where the message includes information about the allocated TMGI and the MBS service area.

S607: The NEF network element/MBSF network element determines a corresponding MB-SMF network element based on the TMGI in the MBS session create request message. For details, refer to the foregoing descriptions of S507. Details are not described herein again.

S608: The NEF network element/MBSF network element sends an MBS session create request (Nmbsmf_MBSSession_CreateRequest) message to the MB-SMF network element, where the message includes the TMGI and the information about the MBS service area.

S601 to S608 are optional steps for triggering the MB-SMF network element to obtain first area information, in other words, S601 to S608 are possible implementations for triggering the MB-SMF network element to obtain first area information.

S609: The MB-SMF network element sends a network element discovery request (Nnrf_NFDiscovery_Request) message to the NRF network element, where the message is for requesting to perform query on an AMF network element that supports an MBS in the MBS service area, and the message includes the information about the MBS service area.

S610: The NRF network element searches, based on the information about the MBS service area, for the corresponding AMF network element supporting MBS.

S611: The NRF network element returns a response message of the Nnrf_NFDiscovery_Request: an Nnrf_NFDiscovery_Response message, to the MB-SMF network element, where the response message includes the following information:
an AMF network element list, where the list includes identification information of an AMF network element supporting MBS in the MBS service area. Optionally, a TAI or a Cell ID corresponding to each AMF network element in the AMF network element list may be further included.

S612: Optionally, the MB-SMF network element sends a broadcast session create request message to all or some AMF network elements in the AMF network element list returned by the NRF network element, to request to create a broadcast session.

S613: The MB-SMF network element calculates, based on the information about the MBS service area and the TAI or the Cell ID corresponding to the AMF network element supporting MBS in the MBS service area, a TAI of a tracking area not supporting MBS or a Cell ID of a cell not supporting MBS in the MBS service area (that is, the first area information).

S614: The MB-SMF network element sends a response message of the Nmbsmf_MBSSession_CreateRequest message to the NEF network element/MBSF network element, where the response message includes the TAI of the tracking area not supporting MBS or the Cell ID of the cell not supporting MBS in the MBS service area.

S615: The NEF network element/MBSF network element sends a response message of the Nnef_MBSSession_Create request message to the AF network element, where the response message includes the TAI of the tracking area not supporting MBS or the Cell ID of the cell not supporting MBS in the MBS service area.

S616: The AF network element transmits, in a unicast mode based on the TAI of the tracking area not supporting MBS or the Cell ID of the cell not supporting MBS in the MBS service area, data to a terminal device located in the tracking area or the cell not supporting MBS in the MBS service area.

For specific implementations of S609 to S616, refer to the foregoing descriptions of S401 to S403. Details are not described herein again.

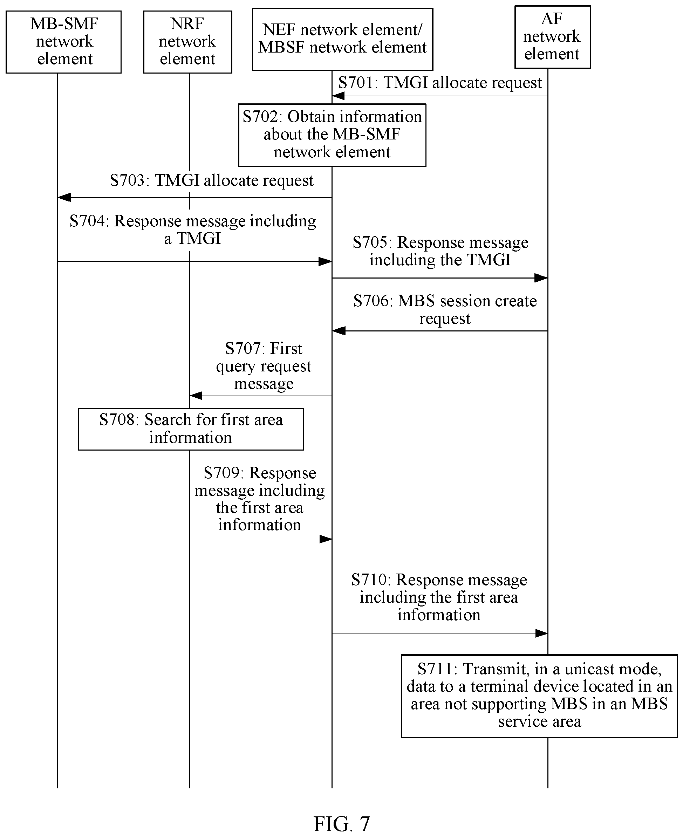

In still another possible implementation, as shown in FIG. 7, assuming that a first network element is an NEF network element/MB SF network element, the communication method provided in this embodiment of this application may include the following steps.

S701: An AF network element sends a TMGI allocate request (Nnef_TMGI_allocate request) message to an NEF network element/MBSF network element, where the message is for requesting a core network to allocate a TMGI.

S702: The NEF network element/MBSF network element performs authentication on the request of the AF network element. If the authentication on the AF network element succeeds, the NEF network element/MBSF network element may obtain information about the MB-SMF network element. For details, refer to the foregoing descriptions of S502. Details are not described herein again.

S703: The NEF network element/MBSF network element sends a TMGI allocate request message to the MB-SMF network element, where the message is for requesting the MB-SMF network element to allocate the TMGI.

S704: The MB-SMF network element returns a response message of the TMGI allocate request message to the NEF network element/MBSF network element, where the response message includes the TMGI allocated by the MB-SMF network element.

S705: The NEF network element/MBSF network element returns a response message of the Nnef_TMGI_allocate request message to the AF network element, where the response message includes the allocated TMGI.

S706: The AF network element sends an MBS session create request (Nnef_MBSSession_Create request) message to the NEF network element/MBSF network element, to request to create an MBS session in an MBS service area (MBS service area), where the message includes information about the allocated TMGI and the MBS service area.

S701 to S706 are optional steps for triggering the NEF network element/MBSF network element to obtain first area information, in other words, S701 to S706 are possible implementations for triggering the NEF network element/MBSF network element to obtain first area information.

S707: The NEF network element/MBSF network element sends a first query request message to the NRF network element, where the message is used for requesting to perform query on an area not supporting MBS in the MBS service area, and the message includes the information about the MBS service area.

S708: The NRF network element searches, based on the information about the MBS service area, for a TAI of a tracking area not supporting MBS or a Cell ID of a cell not supporting MBS in the MBS service area (that is, the first area information).

S709: The NRF network element returns a response message of the first query request message to the NEF network element/MBSF network element, where the response message includes the TAI of the tracking area not supporting MBS or the Cell ID of the cell not supporting MBS in the MBS service area.

S710: The NEF network element/MBSF network element sends a response message of the Nnef_MBSSession_Create request message to the AF network element, where the response message includes the TAI of the tracking area not supporting MBS or the Cell ID of the cell not supporting MBS in the MBS service area.

S711: The AF network element transmits, in a unicast mode based on the TAI of the tracking area not supporting MBS or the Cell ID of the cell not supporting MBS in the MBS service area, data to a terminal device located in the tracking area or the cell not supporting MBS in the MBS service area.

For specific implementations of S707 to S711, refer to the foregoing descriptions of S401 to S403. Details are not described herein again.

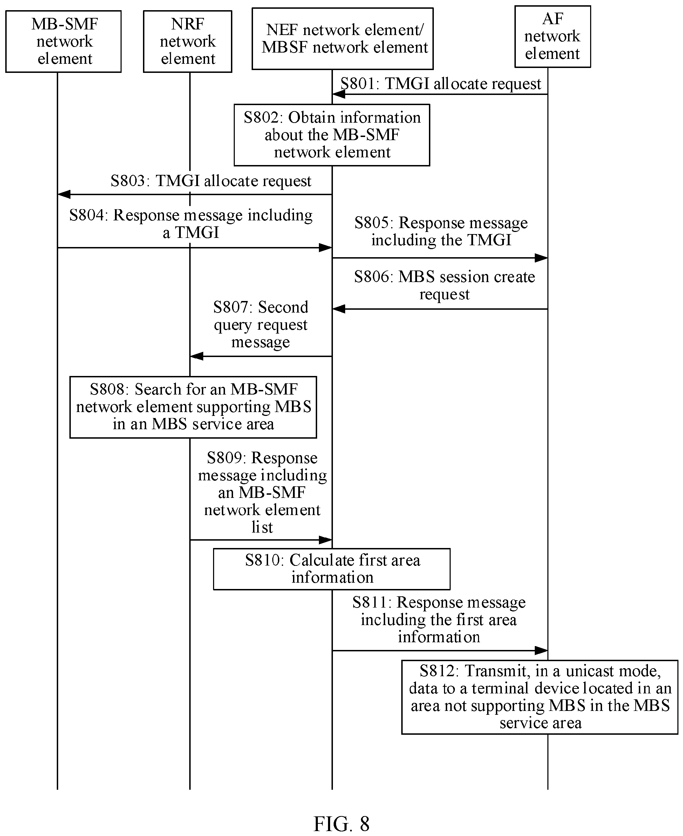

In still another possible implementation, as shown in FIG. 8, assuming that a first network element is an NEF network element/MB SF network element, the communication method provided in this embodiment of this application may include the following steps.

S801: An AF network element sends a TMGI allocate request (Nnef_TMGI_allocate request) message to an NEF network element/MBSF network element, where the message is for requesting a core network to allocate a TMGI.

S802: The NEF network element/MBSF network element performs authentication on the request of the AF network element. If the authentication on the AF network element succeeds, the NEF network element/MBSF network element may obtain information about the MB-SMF network element. For details, refer to the foregoing descriptions of S502. Details are not described herein again.

S803: The NEF network element/MBSF network element sends a TMGI allocate request message to the MB-SMF network element, where the message is for requesting the MB-SMF network element to allocate the TMGI.

S804: The MB-SMF network element returns a response message of the TMGI allocate request message to the NEF network element/MBSF network element, where the response message includes the TMGI allocated by the MB-SMF network element.

S805: The NEF network element/MBSF network element returns a response message of the Nnef_TMGI_allocate request message to the AF network element, where the response message includes the allocated TMGI.

S806: The AF network element sends an MBS session create request (Nnef_MBSSession_Create request) message to the NEF network element/MBSF network element, to request to create an MBS session in an MBS service area (MBS service area), where the message includes information about the allocated TMGI and the MBS service area.

S801 to S806 are optional steps for triggering the NEF network element/MBSF network element to obtain first area information, in other words, S801 to S806 are possible implementations for triggering the NEF network element/MBSF network element to obtain first area information.

S807: The NEF network element/MBSF network element sends a second query request message to the NRF network element, where the message is for requesting to perform query on an MB-SMF network element in the MBS service area, and the message includes the information about the MBS service area.

S808: The NRF network element searches for the MB-SMF network element in the MBS service area based on the information about the MBS service area.

S809: The NRF network element returns a response message of the second query request message to the NEF network element/MBSF network element, where the response message includes an MB-SMF network element list, and the list includes identification information of the MB-SMF network element in the MBS service area. Optionally, a TAI or a Cell ID corresponding to each MB-SMF network element in the MB-SMF network element list may be further included.

S810: The NEF network element/MBSF network element calculates, based on the information about the MBS service area and the TAI or the Cell ID corresponding to the MB-SMF network element supporting MBS in the MBS service area, a TAI of a tracking area not supporting MBS or a Cell ID of a cell not supporting MBS in the MBS service area (that is, the first area information).

S811: The NEF network element/MBSF network element sends a response message of the Nnef_MBSSession_Create request message to the AF network element, where the response message includes the TAI of the tracking area not supporting MBS or the Cell ID of the cell not supporting MBS in the MBS service area.

S812: The AF network element transmits, in a unicast mode based on the TAI of the tracking area not supporting MBS or the Cell ID of the cell not supporting MBS in the MBS service area, data to a terminal device located in the tracking area or the cell not supporting MBS in the MBS service area.

For specific implementations of S807 to S812, refer to the foregoing descriptions of S401 to S403. Details are not described herein again.

It may be understood that, in the foregoing embodiments, the methods and/or steps implemented by the application function network element, the first network element, or the network repository function network element may alternatively be implemented by a component (for example, a chip or a circuit) that may be used in the application function network element, the first network element, or the network repository function network element.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the application function network element in the foregoing method embodiment, or an apparatus including the foregoing application function network element, or a component that may be used in the application function network element; or the communication apparatus may be the first network element in the foregoing method embodiment, or an apparatus including the foregoing first network element, or a component that may be used in the first network element; or the communication apparatus may be the network repository function network element in the foregoing method embodiment, or an apparatus including the network repository function network element, or a component that may be used in the network repository function network element. It may be understood that, to implement the foregoing functions, the communication apparatus includes a hardware structure and/or a software module for performing a corresponding function. A person skilled in the art should easily be aware that, with reference to units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes outside the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, module division is an example, and is merely a logical function division. In actual implementation, another division manner may be used.

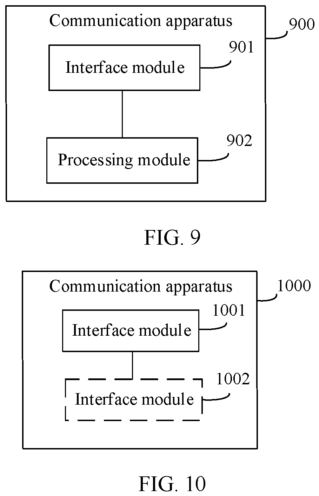

FIG. 9 is a diagram of a structure of a communication apparatus 900. The communication apparatus 900 includes an interface module 901 and a processing module 902. The interface module 901 may also be referred to as a transceiver module or a transceiver unit. The interface module 901 is configured to implement a transceiver function. For example, the interface module may be a transceiver circuit, a transceiver machine, a transceiver, or a communication interface.

For example, the communication apparatus 900 is the application function network element in the foregoing method embodiment. In a possible implementation, the interface module 901 is configured to receive first area information from a first network element, where the first area information indicates an area not supporting MBS in an MBS service area. The processing module 902 is configured to transmit, in a unicast mode by using the interface module 901 and based on the first area information, data to a terminal device located in the area not supporting MBS in the MBS service area.

Optionally, the first network element is a multicast session management network element, a network exposure function network element, or a multicast/broadcast service function network element.

Optionally, the first network element is a multicast session management network element, and the interface module 901 is specifically configured to receive the first area information from the multicast session management network element via a network exposure function network element or a multicast/broadcast service function network element.

Optionally, the interface module 901 is further configured to send a first request message to the first network element, where the first request message is for requesting to create an MBS session in the MBS service area.

Optionally, the first request message carries at least one of area information of the MBS service area, identification information of the MBS service area, identification information of an MBS service, and identification information of a multicast session.

For example, the communication apparatus 900 is the first network element in the foregoing method embodiment. In a possible implementation, the processing module 902 is configured to obtain first area information, where the first area information indicates an area not supporting MB S in an MBS service area. The interface module 901 is configured to send the first area information to the application function network element.

Optionally, the processing module 902 is specifically configured to send a second request message to the network repository function network element by using the interface module 901, where the second request message is for triggering the network repository function network element to return information about the area not supporting MBS in the MBS service area, and receive a second response message from the network repository function network element by using the interface module 901, where the second response message includes the first area information.

Optionally, the second request message includes at least one of area information of the MBS service area, identification information of the MBS service area, identification information of an MBS service, and identification information of a multicast session.

Optionally, the first network element is a multicast session management network element, the second request message is further used for requesting to perform query on an access and mobility management function network element supporting MBS in the MBS service area, and the second response message further includes information indicating the access and mobility management function network element supporting MBS in the MBS service area. The processing module 902 is further configured to send, based on the second response message and by using the interface module 901, a third request message to the access and mobility management function network element supporting MBS in the MBS service area, where the third request message is for requesting to create an MBS session.

Optionally, the processing module 902 is specifically configured to receive second area information from the network repository function network element by using the interface module 901, where the second area information indicates an area supporting MBS in the MBS service area, and is used for determining the first area information based on area information of the MBS service area and the second area information.

Optionally, the interface module 901 is further configured to send a fourth request message to the network repository function network element, where the fourth request message is for triggering the network repository function network element to return the second area information, and the second area information is carried in a response message of the fourth request message.

Optionally, the first network element is a multicast session management network element, the fourth request message is for requesting to perform query on an access and mobility management function network element supporting MBS in the MBS service area, and the second area information indicates an area corresponding to the access and mobility management function network element supporting MBS in the MBS service area.

Optionally, the first network element is a network exposure function network element or a multicast/broadcast service function network element, the fourth request message is for requesting to perform query on a multicast session management network element in the MBS service area, and the second area information indicates an area corresponding to the multicast session management network element in the MBS service area.

Optionally, the first network element is a multicast session management network element, and the interface module 901 is specifically configured to send the first area message to the application function network element via a network exposure function network element or a multicast/broadcast service function network element.

Optionally, the second area information includes identification information of a tracking area supporting MBS in the MBS service area; or the second area information includes identification information of a cell supporting MBS in the MBS service area.

In a simple embodiment, a person skilled in the art may figure out that the communication apparatus 900 may be in the form of the communication apparatus 300 shown in FIG. 3.

For example, the processor 301 in the communication apparatus 300 shown in FIG. 3 may invoke the computer-executable instructions stored in the memory 303, to enable the communication apparatus 300 to perform the communication method in the foregoing method embodiments. Specifically, functions/implementation processes of the interface module 901 and the processing module 902 in FIG. 9 may be implemented by the processor 301 in the communication apparatus 300 shown in FIG. 3 by invoking the computer-executable instructions stored in the memory 303. Alternatively, a function/an implementation process of the processing module 902 in FIG. 9 may be implemented by the processor 301 in the communication apparatus 300 shown in FIG. 3 by invoking the computer-executable instructions stored in the memory 303, and a function/an implementation process of the interface module 901 in FIG. 9 may be implemented through the communication interface 304 in the communication apparatus 300 shown in FIG. 3.

The communication apparatus 900 provided in this embodiment may perform the foregoing communication method. Therefore, for technical effects that can be achieved by the communication apparatus 900, refer to the foregoing method embodiments. Details are not described herein again.

FIG. 10 is a diagram of a structure of another communication apparatus 1000. The communication apparatus 1000 includes an interface module 1001. The interface module 1001 may also be referred to as a transceiver module or a transceiver unit. The interface module 1001 is configured to implement a transceiver function. For example, the interface module may be a transceiver circuit, a transceiver machine, a transceiver, or a communication interface.

For example, the communication apparatus 1000 is the network repository function network element in the foregoing method embodiment. In a possible implementation, the interface module 1001 is configured to receive a second request message from a first network element, where the second request message is for triggering the network repository function network element to return information about an area not supporting MBS in a multicast/broadcast service MBS service area. The interface module 1001 is further configured to send first area information to the first network element, where the first area information indicates the area not supporting MBS in the MBS service area.

Optionally, the communication apparatus 1000 further includes a processing module 1002. The second request message includes at least one of area information of the MBS service area, identification information of the MBS service area, identification information of an MBS service, and identification information of a multicast session. The processing module 1002 is configured to determine the first area information based on at least one of the area information of the MBS service area, the identification information of the MBS service area, the identification information of the MBS service, and the identification information of the multicast session.

Optionally, the processing module 1002 is specifically configured to obtain, based on the area information of the MBS service area, the preconfigured information about the area not supporting MBS in the MBS service area.

Optionally, the processing module 1002 is specifically configured to determine the first area information based on the identification information of the MBS service area and a preconfigured mapping relationship between the identification information of the MBS service area and the area not supporting MBS in the MBS service area.

Optionally, the processing module 1002 is specifically configured to determine the first area information based on the identification information of the MBS service, a preconfigured mapping relationship between the identification information of the MBS service and the MBS service area, and a preconfigured mapping relationship between the MBS service area and the area not supporting MBS in MBS service area.

Optionally, the processing module 1002 is specifically configured to determine the first area information based on the identification information of the multicast session, a preconfigured mapping relationship between the identification information of the multicast session and the MBS service area, and a preconfigured mapping relationship between the MBS service area and the area not supporting MBS in MBS service area.

Optionally, the processing module 1002 is specifically configured to: obtain, based on the area information of the MBS service area, information about an area supporting MBS in the MBS service area, and determine the first area information based on the area information of the MBS service area and the information about the area supporting MBS in the MBS service area.

Optionally the first network element is a multicast session management network element, or the first network element is a network exposure function network element, or the first network element is a multicast/broadcast service function network element.

Optionally, the communication apparatus 1000 further includes a processing module 1002, the first network element is a multicast session management network element, and the second request message is further used for requesting to perform query on an access and mobility management function network element supporting MBS in the MBS service area. The processing module 1002 is further configured to determine, based on the second request message, the access and mobility management function network element supporting MBS in the MBS service area. The interface module 1001 is further configured to send, to the first network element, information indicating the access and mobility management function network element supporting MBS in the MBS service area.

In another possible implementation, the interface module 1001 is configured to receive a fourth request message from a first network element. The fourth request message is for triggering the network repository function network element to return information about an area that supports an MBS in a multicast/broadcast service MBS service area. The interface module 1001 is further configured to send, to the first network element, second area information indicating the area supporting MBS in the MBS service area, where the second area information is used for determining first area information, and the first area information indicates an area not supporting MBS in the MBS service area.

Optionally, the first network element is a multicast session management network element, the fourth request message is for requesting to perform query on an access and mobility management function network element supporting MBS in the MBS service area, and the second area information indicates an area corresponding to the access and mobility management function network element supporting MBS in the MBS service area.

Optionally, the first network element is a network exposure function network element or a multicast/broadcast service function network element, the fourth request message is for requesting to perform query on a multicast session management function network element in the MBS service area, and the second area information indicates an area corresponding to a multicast session management network element supporting MBS in the MBS service area.

Optionally, the second area information includes identification information of a tracking area supporting MBS in the MBS service area; or the second area information includes identification information of a cell supporting MBS in the MBS service area.

Optionally, the first area information includes identification information of a tracking area not supporting MBS in the MBS service area; or the first area information includes identification information of a cell not supporting MBS in the MBS service area.

In this embodiment, the communication apparatus 1000 is presented in the form of functional modules obtained through integration. The "module" herein may be a specific ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1000 may be in the form of the communication apparatus 300 shown in FIG. 3.

For example, the processor 301 in the communication apparatus 300 shown in FIG. 3 may invoke the computer-executable instructions stored in the memory 303, to enable the communication apparatus 300 to perform the communication method in the foregoing method embodiments. Specifically, functions/implementation processes of the interface module 1001 and the processing module 1002 in FIG. 10 may be implemented by the processor 301 in the communication apparatus 300 shown in FIG. 3 by invoking the computer-executable instructions stored in the memory 303. Alternatively, a function/an implementation process of the processing module 1002 in FIG. 10 may be implemented by the processor 301 in the communication apparatus 300 shown in FIG. 3 by invoking the computer-executable instructions stored in the memory 303, and a function/an implementation process of the interface module 1001 in FIG. 10 may be implemented through the communication interface 304 in the communication apparatus 300 shown in FIG. 3.

The communication apparatus 1000 provided in this embodiment may perform the foregoing communication method. Therefore, for technical effects that can be achieved by the communication apparatus 1000, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in the form of a computer program instruction, and is stored in the memory. The processor may be configured to execute the program instruction and implement the foregoing method procedure. The processor may be built into a SoC (system on chip) or an ASIC, or may be an independent semiconductor chip. In addition to a core that is configured to execute software instructions to perform operation or processing, the processor may further include a necessary hardware accelerator, such as a field-programmable gate array (field-programmable gate array, FPGA), a programmable logic device (programmable logic device, PLD), or a logic circuit that implements special logic operation.

When the foregoing modules or units are implemented through hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedure.

Optionally, an embodiment of this application further provides a chip system, including: at least one processor and an interface, where the at least one processor is coupled to a memory by using the interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented by using software, hardware, firmware, or any combination thereof. When a software program is used to implement embodiments, all or some of the embodiments may be implemented in the form of a computer program product.

This application provides a computer program product, including one or more computer instructions. When the computer instructions are run on a communication apparatus, any method in embodiments of this application is performed.

When the computer program instructions are loaded and executed on the computer, the procedure or functions according to embodiments of this application are all or partially generated. The computer may be a general-purpose computer, a dedicated computer, a computer network, or other programmable apparatuses.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), or a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement a plurality of functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to this application without departing from the protection scope of this application. Correspondingly, the specification and accompanying drawings are merely example description of this application defined by the appended claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

## Claims

1. A communication method, wherein the method comprises:
receiving, by an application function network element, first area information from a first network element, wherein the first area information indicates an area not supporting MBS in an MBS service area; and
transmitting, by the application function network element in a unicast mode based on the first area information, data to a terminal device located in the area not supporting MBS in the MBS service area.

2. The method according to claim 1, wherein the first network element is a multicast session management network element, a network exposure function network element, or a multicast/broadcast service function network element.

3. The method according to claim 1 or 2, wherein the first network element is a multicast session management network element; and
the receiving, by an application function network element, first area information from a first network element comprises:
receiving, by the application function network element, the first area information from the multicast session management network element via a network exposure function network element or a multicast/broadcast service function network element.

4. The method according to any one of claims 1 to 3, wherein before the receiving, by an application function network element, first area information from a first network element, the method further comprises:
sending, by the application function network element, a first request message to the first network element, wherein the first request message is for requesting to create an MBS session in the MBS service area.

5. The method according to claim 4, wherein the first request message carries at least one of area information of the MBS service area, identification information of the MBS service area, identification information of an MBS service, and identification information of a multicast session.

6. A communication method, wherein the method comprises:
obtaining, by a first network element, first area information, wherein the first area information indicates an area not supporting MBS in an MBS service area; and
sending, by the first network element, the first area information to an application function network element.

7. The method according to claim 6, wherein the obtaining, by a first network element, first area information comprises:
sending, by the first network element, a second request message to a network repository function network element, wherein the second request message is for triggering the network repository function network element to return information about the area not supporting MBS in the MBS service area; and
receiving, by the first network element, a second response message from the network repository function network element, wherein the second response message comprises the first area information.

8. The method according to claim 7, wherein the second request message comprises at least one of area information of the MBS service area, identification information of the MBS service area, identification information of an MBS service, and identification information of a multicast session.

9. The method according to claim 7 or 8, wherein the first network element is a multicast session management network element, the second request message is further for requesting to perform query on an access and mobility management function network element supporting MBS in the MBS service area, and the second response message further comprises information indicating the access and mobility management function network element supporting MBS in the MBS service area; and
the method further comprises:
sending, by the first network element based on the second response message, a third request message to the access and mobility management function network element supporting MBS in the MBS service area, wherein the third request message is for requesting to create an MBS session.

10. The method according to claim 6, wherein the obtaining, by a first network element, first area information comprises:
receiving, by the first network element, second area information from a network repository function network element, wherein the second area information indicates an area supporting MBS in the MBS service area; and
determining, by the first network element, the first area information based on area information of the MBS service area and the second area information.

11. The method according to claim 10, wherein the method further comprises:
sending, by the first network element, a fourth request message to the network repository function network element, wherein the fourth request message is for triggering the network repository function network element to return the second area information, and the second area information is carried in a response message of the fourth request message.

12. The method according to claim 11, wherein the first network element is a multicast session management network element; and
the fourth request message is for requesting to perform query on an access and mobility management function network element supporting MBS in the MBS service area, and the second area information indicates an area corresponding to the access and mobility management function network element supporting MBS in the MBS service area.

13. The method according to claim 11, wherein the first network element is a network exposure function network element or a multicast/broadcast service function network element, the fourth request message is for requesting to perform query on a multicast session management network element in the MBS service area, and the second area information indicates an area corresponding to the multicast session management network element in the MBS service area.

14. The method according to any one of claims 6 to 12, wherein the first network element is a multicast session management network element, and the sending, by the first network element, the first area information to an application function network element comprises:
sending, by the first network element, the first area message to the application function network element via a network exposure function network element or a multicast/broadcast service function network element.

15. The method according to any one of claims 10 to 14, wherein the second area information comprises identification information of a tracking area supporting MBS in the MBS service area; or
the second area information comprises identification information of a cell supporting MBS in the MBS service area.

16. A communication method, wherein the method comprises:
receiving, by a network repository function network element, a second request message from a first network element, wherein the second request message is for triggering the network repository function network element to return information about an area not supporting MBS in a multicast/broadcast service MBS service area; and
sending, by the network repository function network element, first area information to the first network element, wherein the first area information indicates the area not supporting MBS in the MBS service area.

17. The method according to claim 16, wherein the second request message comprises at least one of area information of the MBS service area, identification information of the MBS service area, identification information of an MBS service, and identification information of a multicast session, and the method further comprises:
determining, by the network repository function network element, the first area information based on at least one of the area information of the MBS service area, the identification information of the MBS service area, the identification information of the MBS service, and the identification information of the multicast session.

18. The method according to claim 17, wherein the determining, by the network repository function network element, the first area information based on at least one of the area information of the MBS service area, the identification information of the MBS service area, the identification information of the MBS service, and the identification information of the multicast session comprises:
obtaining, by the network repository function network element based on the area information of the MBS service area, the preconfigured information about the area not supporting MBS in the MBS service area.

19. The method according to claim 17, wherein the determining, by the network repository function network element, the first area information based on at least one of the area information of the MBS service area, the identification information of the MBS service area, the identification information of the MBS service, and the identification information of the multicast session comprises:
determining, by the network repository function network element, the first area information based on the identification information of the MBS service area and a preconfigured mapping relationship between the identification information of the MBS service area and the area not supporting MBS in the MBS service area.

20. The method according to claim 17, wherein the determining, by the network repository function network element, the first area information based on at least one of the area information of the MBS service area, the identification information of the MBS service area, the identification information of the MBS service, and the identification information of the multicast session comprises:
determining, by the network repository function network element, the first area information based on the identification information of the MBS service, a preconfigured mapping relationship between the identification information of the MBS service and the MBS service area, and a preconfigured mapping relationship between the MBS service area and the area not supporting MBS in the MBS service area.

21. The method according to claim 17, wherein the determining, by the network repository function network element, the first area information based on at least one of the area information of the MBS service area, the identification information of the MBS service area, the identification information of the MBS service, and the identification information of the multicast session comprises:
determining, by the network repository function network element, the first area information based on the identification information of the multicast session, a preconfigured mapping relationship between the identification information of the multicast session and the MBS service area, and a preconfigured mapping relationship between the MBS service area and the area not supporting MBS in the MBS service area.

22. The method according to claim 17, wherein the determining, by the network repository function network element, the first area information based on at least one of the area information of the MBS service area, the identification information of the MBS service area, the identification information of the MBS service, and the identification information of the multicast session comprises:
obtaining, by the network repository function network element based on the area information of the MBS service area, information about an area supporting MBS in the MBS service area; and
determining, by the network repository function network element, the first area information based on the area information of the MBS service area and the information about the area supporting MBS in the MBS service area.

23. The method according to any one of claims 16 to 22, wherein the first network element is a multicast session management network element; or
the first network element is a network exposure function network element; or
the first network element is a multicast/broadcast service function network element.

24. The method according to claim 23, wherein the first network element is a multicast session management network element, and the second request message is further for requesting to perform query on an access and mobility management function network element supporting MBS in the MBS service area; and
the method further comprises:
determining, by the network repository function network element based on the second request message, the access and mobility management function network element supporting MBS in the MBS service area; and
sending, by the network repository function network element to the first network element, information indicating the access and mobility management function network element supporting MBS in the MBS service area.

25. A communication method, wherein the method comprises:
receiving, by a network repository function network element, a fourth request message from a first network element, wherein the fourth request message is for triggering the network repository function network element to return information about an area that supports an MBS in a multicast/broadcast service MBS service area; and
sending, by the network repository function network element to the first network element, second area information indicating the area supporting MBS in the MBS service area, wherein the second area information is for determining first area information, and the first area information indicates an area not supporting MBS in the MBS service area.

26. The method according to claim 25, wherein the first network element is a multicast session management network element, the fourth request message is for requesting to perform query on an access and mobility management function network element supporting MBS in the MBS service area, and the second area information indicates an area corresponding to the access and mobility management function network element supporting MBS in the MBS service area.

27. The method according to claim 25, wherein the first network element is a network exposure function network element or a multicast/broadcast service function network element, the fourth request message is for requesting to perform query on a multicast session management function network element in the MBS service area, and the second area information indicates an area corresponding to a multicast session management network element supporting MBS in the MBS service area.

28. The method according to any one of claims 25 to 27, wherein the second area information comprises identification information of a tracking area supporting MBS in the MBS service area; or
the second area information comprises identification information of a cell supporting MBS in the MBS service area.

29. The method according to any one of claims 1 to 28, wherein the first area information comprises identification information of a tracking area not supporting MBS in the MBS service area; or
the first area information comprises identification information of a cell not supporting MBS in the MBS service area.

30. A communication apparatus, comprising a processor, wherein the processor is coupled to a memory, the memory is configured to store computer-executable instructions, the processor is configured to execute the instructions stored in the memory, and when the instructions are run by the processor, the communication apparatus is enabled to perform the method according to any one of claims 1 to 29.

31. A computer-readable storage medium, wherein the computer-readable storage medium stores a computer program, and when the computer program is executed by a computer, the method according to any one of claims 1 to 29 is performed.

32. A communication system, wherein the communication system comprises an application function network element and a first network element, the application function network element is configured to perform the method according to any one of claims 1 to 5, and the first network element is configured to perform the method according to any one of claims 6 to 15.

33. The communication system according to claim 32, wherein the communication system further comprises a network repository function network element; and
the network repository function network element is configured to perform the method according to any one of claims 16 to 29.
